# FASCICULE DE BREVET EUROPEEN

(11) **EP 3 131 769 B1**
(45) Date de publication et mention de la délivrance du brevet: **15.01.2020**
(21) Numéro de dépôt: 15717042.4
(22) Date de dépôt: 27.03.2015
(51) Int. Cl.: B60G 3/14, B60G 99/00, B60G 21/00, B62D 9/04, B60G 7/00, B60G 7/02

(54) **VÉHICULE POSSÉDANT UN CHÂSSIS ET UNE NACELLE PENDULAIRE**
FAHRZEUG MIT EINEM GESTELL UND EINER PENDELGONDEL
VEHICLE HAVING A CHASSIS AND A PENDULUM NACELLE

(30) Priorité: 17.04.2014 FR 1453513
(43) Date de publication de la demande: 22.02.2017
(73) Titulaire: SWINCAR, 26780 Allan (FR)
(72) Inventeur: RAMBAUD, Pascal, F-26780 Allan (FR)
(74) Mandataire: Delorme, Nicolas
(86) Numéro de dépôt international: PCT/FR2015/050799
(87) Numéro de publication internationale: WO 2015/158976

(56) Documents cités:
- WO-A1-2006/129020
- WO-A2-2014/041210
- FR-A1- 2 187 370
- FR-A1- 2 522 590
- FR-A1- 2 542 686
- US-A1- 2004 195 787
- US-A1- 2007 267 883
- Mecanroc: "SWINCAR ELECTRIQUE", , 28 octobre 2012 (2012-10-28), XP054975631, Extrait de l'Internet: URL:https://www.youtube.com/watch?v=O4ulku EIDA8 [extrait le 2014-12-05]

## Description

La présente invention concerne un véhicule possédant un châssis et une nacelle pendulaire.

Le document WO 2006/129020 décrit un véhicule de ce type, qui comprend un châssis sur lequel sont montés un train de roues avant et un train de roues arrière, et une nacelle montée pivotante par rapport au châssis autour d'un axe d'articulation sensiblement longitudinal médian, de sorte que le centre de gravité de la nacelle soit situé sous ledit axe d'articulation.

Dans un tel véhicule, la nacelle s'incline en virage vers l'intérieur sous le seul effet de la force centrifuge et proportionnellement à elle. Ainsi, les occupants ne ressentent aucune accélération latérale - ou la charge ne subit aucune contrainte latérale - et la nacelle ne subit aucun moment de torsion.

Les avantages qui en découlent sont les suivants :
- amélioration du confort et de la sensation d'équilibre des occupants du véhicule, ou stabilité accrue des charges transportées dans la nacelle ;
- gain en termes de dimensionnement des composants du véhicule par rapport à un véhicule classique, dans la mesure où les contraintes subies sont moins importantes, d'où un allègement et une consommation moindre ;
- du fait de l'inclinaison automatique en virage, il n'est pas nécessaire de recourir à des moyens électroniques ou informatiques permettant d'analyser les données du véhicule en fonctionnement (accélérations, rayon du virage, etc.) et d'agir sur des commandes du véhicule en fonction de ces données, d'où un gain en coût, en poids, et en fiabilité.

Un autre véhicule de ce type est décrit dans le document US 2007/0267883, qui est considéré comme l'état de la technique le plus proche.

Toutefois, ce type de véhicule, s'il donne généralement satisfaction, est encore perfectible du point de vue de sa manœuvrabilité.

La présente invention vise à fournir un véhicule possédant une manœuvrabilité améliorée par rapport à l'art antérieur.

A cet effet, l'invention concerne un véhicule selon la revendication 1.

En prévoyant d'équiper le véhicule de traverses pouvant ainsi pivoter indépendamment l'une de l'autre, l'invention permet de garantir un excellent contact de chacun des quatre supports de déplacement avec le sol, quel que soit le terrain. En effet, une traverse peut pivoter selon les contraintes auxquelles sont soumis les supports de déplacement qui lui sont liés, en particulier selon le profil du terrain au niveau de chacun de ces supports de déplacement, sans que les contraintes auxquelles sont soumis les supports de déplacement liés à l'autre traverse n'aient d'impact. La stabilité du véhicule et sa capacité à se déplacer sur des terrains accidentés s'en trouve donc accrues.

En particulier, le véhicule selon l'invention est bien adapté aux terrains en dévers, dans lesquels il permet une correction de l'aplomb : en effet, la nacelle reste horizontale tandis que les traverses sont parallèles au sol. Quant aux supports de déplacement, s'ils ont une possibilité d'inclinaison, leur plan moyen - qui est vertical en position neutre - reste sensiblement vertical, et dans le cas contraire, ce plan moyen reste sensiblement perpendiculaire au sol. Le véhicule selon l'invention trouve un intérêt tout particulier lorsque le terrain présente des dévers opposés entre l'avant et l'arrière du véhicule, car chacune des traverses, étant indépendante de l'autre en rotation autour de l'axe d'articulation, peut se placer parallèlement à la partie du terrain située au voisinage des roues qu'elle porte.

Par ailleurs, de façon concrète, comme les traverses sont des pièces distinctes qui ne sont pas liées entre elles (à part via la nacelle et l'axe d'articulation), en particulier, il n'existe pas de longerons liant les traverses. Le châssis ne présente donc pas la forme d'un cadre, mais est constitué uniquement des deux traverses. Le châssis s'en trouve donc plus léger. En outre, l'absence de longerons favorise l'accessibilité de la nacelle latéralement, notamment pour une personne handicapée.

En pratique, chacune des traverses peut s'étendre globalement transversalement quand le véhicule est en position neutre. Toutefois, les traverses ne sont pas nécessairement rectilignes, et pourraient présenter des parties courbes ou des portions rectilignes inclinées les unes par rapport aux autres.

La position neutre est celle occupée par le véhicule lorsqu'il repose sur une surface plate et horizontale et qu'il est à l'arrêt, avec les supports de déplacement orientés pour que le véhicule puisse se déplacer selon une ligne droite.

Le fait d'agencer les traverses en partie supérieure de la nacelle, et non par exemple à la hauteur des moyeux des roues constituant des supports de déplacement, présente de nombreux avantages.

Tout d'abord, la garde au sol du véhicule est considérablement accrue, ce qui est particulièrement utile dans une application tout terrain du véhicule.

En outre, les supports de déplacement du train concerné, voire même l'intégralité du train concerné - avant et/ou arrière - peuvent tourner sur une plus grande amplitude sans être gênés par la traverse correspondante. Cette plus grande liberté de rotation se traduit par une plus grande facilité à manœuvrer le véhicule, ce qui est d'autant plus intéressant que le terrain est accidenté.

De façon concrète, les supports de déplacement peuvent être des roues, des skis, des chenilles, ou autre, les différents supports de déplacement du véhicule n'étant pas nécessairement tous de la même nature.

Le fait d'avoir un pivot de direction en bout de traverse, et non à proximité du support de déplacement ou de son moyeu, et de préférence en hauteur présente de nombreux avantages.

L'ensemble comprenant les supports de déplacement du train et les deux bras articulés peut tourner autour du pivot de direction sur une grande amplitude. Ceci permet d'améliorer encore la manœuvrabilité, mais également de permettre un accès au véhicule via un large espace latéral, notamment pour les handicapés.

De plus, il est envisageable de démonter le véhicule au niveau du pivot de direction, en particulier pour son transport. Avec la configuration précitée, les sous-ensembles du véhicule obtenus après démontage ont un encombrant réduit et également un poids limité.

En outre, l'axe du pivot de direction est de préférence situé dans un plan transversal du véhicule et incliné vers le haut, en direction du plan de symétrie longitudinal médian du véhicule, et ce pour avoir un rappel de direction et ainsi améliorer la stabilité du véhicule. Il résulte de cet agencement, et du fait que la traverse et le pivot de direction sont situés en partie haute du véhicule, que la traverse peut être beaucoup plus étroite que la voie du véhicule - c'est-à-dire la distance transversale entre les deux supports de déplacement d'un même train. Ceci constitue un avantage important de réduction d'encombrement quand on démonte le véhicule au niveau du pivot de direction. A titre indicatif, la largeur de la traverse peut être de l'ordre de la moitié de la largeur du véhicule.

Il est à noter que, quelle que soit la position du pivot de direction (notamment au dessus des supports de déplacement), les paramètres géométriques habituels en automobile - tels qu'angle de pivot et angle de chasse - peuvent être parfaitement maîtrisés. Ainsi, l'angle de l'axe du pivot de direction peut être réglé pour que le prolongement de cet axe passe par le point de contact de la roue avec le sol ou à un autre endroit, en fonction des effets d'auto-stabilité et de rappel de direction souhaités.

Le véhicule peut par exemple comporter deux trains de deux supports de déplacement, chacun des quatre supports de déplacement étant directeur.

A l'inverse, le véhicule peut ne comporter aucun support de déplacement directeur. Par exemple, il pourrait s'agir d'un traîneau muni de supports pouvant glisser sur une surface enneigée et attelé à un engin, tel qu'une motoneige, dont il suivrait la trajectoire.

Le véhicule peut en outre comporter un volant de direction monté sur la nacelle, apte à provoquer le braquage des supports de déplacement directeurs par l'intermédiaire de moyens de transmission.

Selon une réalisation possible, chacun des supports de déplacement est directeur, le volant et les moyens de transmission étant agencés pour provoquer le braquage des supports de déplacement d'un premier train, le véhicule comprenant en outre un mécanisme de renvoi liant les moyens de transmission et des moyens de commande du braquage des supports de déplacement du deuxième train.

Le mécanisme du deuxième train - typiquement le train arrière - peut être symétrique du mécanisme du premier train - typiquement le train avant - par rapport à un plan transversal médian du véhicule, pour ce qui concerne :
- le système de liaison entre la traverse et les supports de déplacement;
- certains composants des moyens de commande et des moyens de transmission (à l'exception des parties des moyens de transmission directement liés au volant).

Selon un premier mode de réalisation, les supports de déplacement sont des roues, le véhicule étant apte à circuler sur une route ou sur un terrain naturel non enneigé. Les supports de déplacement peuvent également être des chenilles.

Selon un deuxième mode de réalisation, les supports de déplacement sont des supports glissants aptes à glisser sur une surface enneigée, tels que des portions de tube ou des éléments en forme de skis. Le véhicule comprend en outre un organe d'accrochage qui fait saillie des supports glissants vers le bas, les organes d'accrochage étant conçus pour pouvoir s'enfoncer dans la neige et empêcher le dérapage latéral du véhicule. Le véhicule peut être un traîneau destiné à être tracté par un engin ou une personne, ou un véhicule non tracté dans lequel s'installe un conducteur.

Selon un mode de réalisation de l'invention, les supports de déplacement du véhicule peuvent, tout comme la nacelle, s'incliner automatiquement et proportionnellement à la force centrifuge vers l'intérieur d'un virage.

Un tel véhicule est ainsi apte à trouver, automatiquement et sans recours à l'électronique, un équilibre dynamique parfait en virage, tout en conservant une autostabilité sécurisante, notamment en cas de perte d'adhérence. Une telle disposition permet également d'alléger les composants du châssis et des trains de supports de déplacement, dans la mesure où la résultante des forces appliquées à ces supports ne génère aucun moment de torsion ou de flexion latérale. Il s'ensuit une diminution des coûts de fabrication et des économies d'énergie motrice.

Pour que le mécanisme fonctionne, il est nécessaire que le moment pendulaire généré par la nacelle ne soit pas contrarié par un moment inverse résultant de la réaction du sol sur les supports de déplacement.

Si un tel moment inverse existe, du fait de la conception du système de liaison, il doit être moins important que le moment pendulaire généré par la nacelle. De plus, l'inclinaison de la nacelle doit être transmise aux supports de déplacement. On obtient alors, malgré ce moment inverse, une inclinaison des supports de déplacement selon l'inclinaison de la nacelle.

Dans le cas où les supports de déplacement sont des supports glissants, on peut prévoir que, pour chacun des supports glissants, le système de liaison comporte un pivot d'inclinaison possédant un axe d'inclinaison sensiblement longitudinal situé à proximité de la surface de contact entre le support glissant et le sol, le véhicule comprenant en outre un dispositif de couplage entre la nacelle et chacun des supports glissants, les dispositifs de couplage étant agencés pour que le pivotement de la nacelle entraîne l'inclinaison des supports glissants.

En agençant l'axe d'inclinaison aussi près que possible de la surface de contact avec le sol, il est possible de réduire le moment de sens inverse appliqué aux supports glissants.

Par ailleurs, que les supports de déplacement soient des roues, des chenilles ou des supports glissants, on peut prévoir que, pour chacun des supports de déplacement, le système de liaison comporte un pivot d'inclinaison possédant un axe d'inclinaison :
- qui s'étend dans un plan sensiblement parallèle au plan longitudinal médian du véhicule en étant incliné vers le bas d'un angle (α) compris entre 5 et 45°, par rapport à l'axe longitudinal du véhicule, lorsque l'on se rapproche du point de contact (P) entre le support de déplacement et le sol ;
- dont le point d'intersection avec la perpendiculaire au sol passant par ledit point de contact entre le support de déplacement et le sol soit sensiblement confondu avec ledit point de contact ou situé sous ledit point de contact ;
le véhicule étant conçu, de par sa géométrie et/ou la présence de moyens mécaniques associant la nacelle et les supports de déplacement :
- pour provoquer, lorsque le véhicule circule dans un virage, une inclinaison de chacun des supports de déplacement vers l'intérieur du virage, sous l'effet de la force centrifuge, les traverses restant sensiblement parallèles au sol ;
- et pour corriger l'aplomb, lorsque le véhicule circule dans un dévers, la nacelle restant horizontale et le plan moyen des supports de déplacement qui est sensiblement vertical en position neutre restant sensiblement vertical.

Cet agencement de l'axe d'inclinaison permet que la réaction du sol ne possède pas un moment, par rapport à l'axe du pivot d'inclinaison, qui contrarie le mouvement pendulaire. En d'autres termes, la géométrie des supports de déplacement ne s'oppose pas à cette inclinaison.

Dans le cas d'un ski ou d'une chenille, il n'y a pas un unique point de contact du support de déplacement avec le sol. Par « point de contact », on entend alors le point situé sensiblement au centre de la zone de contact entre le support de déplacement et le sol.

Selon une première variante, le véhicule comprend un dispositif de couplage entre la nacelle et chacun des supports de déplacement, les dispositifs de couplage étant agencés pour que le pivotement de la nacelle entraîne l'inclinaison des supports de déplacement et vice-versa.

Si le point d'intersection entre l'axe du pivot d'inclinaison et le sol est sensiblement confondu avec le point de contact entre ladite roue et le sol, le moment de la réaction du sol par rapport à l'axe du pivot d'inclinaison est nul. Les supports de déplacement ne peuvent donc s'incliner que si le mouvement d'inclinaison de la nacelle, autour de l'axe d'articulation, leur est transmis, d'où la nécessité des dispositifs de couplage dans cette configuration.

A l'inverse, si le point d'intersection entre l'axe du pivot d'inclinaison et la perpendiculaire au sol passant par le point de contact entre le support de déplacement et le sol est situé sous ledit point de contact, le moment de la réaction du sol par rapport à l'axe du pivot d'inclinaison provoque une inclinaison automatique des supports de déplacement sous l'effet de la force centrifuge. Ainsi, en virage :
- d'une part, la nacelle pivote autour de l'axe d'articulation ;
- et, d'autre part, les supports de déplacement s'inclinent par pivotement autour des axes d'inclinaison.

Dans ce cas, on peut prévoir des dispositifs de couplage pour la transmission de l'inclinaison entre les supports de déplacement et la nacelle : la nacelle s'incline par effet de pendule mais également parce qu'elle est entraînée par l'inclinaison des supports de déplacement résultant du moment que possède la réaction du sol par rapport à l'axe du pivot d'inclinaison. De façon similaire, les supports de déplacement s'inclinent d'eux-mêmes mais également parce qu'ils sont entraînés par l'inclinaison de la nacelle via les dispositifs de couplage.

Ces dispositifs de couplage ne sont toutefois pas nécessaires puisque les mouvements d'inclinaison précités de la nacelle et des supports de déplacement sont obtenus indépendamment l'un de l'autre, de façon automatique, sous l'action de la force centrifuge.

En variante, si le point d'intersection entre l'axe d'inclinaison et la perpendiculaire au sol passant par ledit point de contact entre le support de déplacement et le sol était situé au-dessus dudit point de contact, les supports de déplacement auraient tendance à s'incliner vers l'extérieur du virage. Il faudrait alors que le moment pendulaire généré par la nacelle soit plus important et que l'inclinaison de la nacelle soit transmise aux supports de déplacement par un dispositif de couplage.

Par ailleurs, dans le cas où l'axe du pivot d'inclinaison est incliné d'un angle α par rapport à l'axe longitudinal du véhicule, et selon une réalisation possible, les moyens de transmission entre le volant et les supports de déplacement directeurs, et les moyens de commande du braquage des supports de déplacement du deuxième train, lorsqu'ils sont présents, comprennent :
- une pièce rotative montée sur la nacelle de façon libre en rotation autour de l'axe d'articulation de la nacelle, la pièce rotative étant entraînée en rotation par une colonne de direction qui est connectée au volant et qui présente un axe décalé par rapport à l'axe d'articulation de la nacelle ;
- et, pour chaque support de déplacement directeur, une biellette de direction présentant une première extrémité connectée à la pièce rotative à distance de l'axe d'articulation et une deuxième extrémité connectée au système de liaison entre ledit support de déplacement et la traverse correspondante ;
les biellettes de direction d'un même train étant disposées sensiblement symétriquement par rapport au plan longitudinal médian du véhicule quand le véhicule est en position neutre ;
le sens de rotation de la pièce rotative, par rapport au sens de rotation du volant, ainsi que le positionnement des biellettes de direction, étant prévus pour que les moyens de transmission et les moyens de commande soient aptes à compenser de façon sensiblement exacte le braquage induit par l'inclinaison des supports de déplacement, en créant un braquage inverse du braquage induit.

Plus précisément, si le pivot d'inclinaison est situé à l'intérieur de l'empattement, la pièce rotative doit tourner dans le sens inverse du volant (par exemple au moyen d'un système mécanique comportant un pignon entrainé par le volant et engrenant avec une couronne dentée constituant la pièce rotative). Dans ce cas, le sur-braquage induit par l'inclinaison du pivot d'inclinaison est compensé par le sous-braquage induit par le pivotement de la nacelle, donc de la pièce rotative.

A l'inverse, si le pivot d'inclinaison est situé à l'extérieur de l'empattement, la pièce rotative doit tourner dans le même sens que le volant (par exemple au moyen d'une chaîne transmettant la rotation). Dans ce cas, le sous-braquage induit par l'inclinaison du pivot d'inclinaison est compensé par le sur-braquage induit par le pivotement de la nacelle, donc de la pièce rotative.

On peut prévoir que, pour au moins un support de déplacement, les moyens de transmission entre le volant et ledit support de déplacement, et le dispositif de couplage entre la nacelle et ledit support de déplacement, lorsqu'il est présent, soient assemblés de façon amovible audit support de déplacement, de sorte à pouvoir être temporairement déconnectés dudit support de déplacement pour permettre de tourner ledit support de déplacement autour de l'axe de direction avec une amplitude suffisante pour libérer l'accès à la nacelle latéralement.

Cette « amplitude suffisante » est supérieure à l'amplitude de déplacement possible en fonctionnement normal, lorsque les moyens de transmission et le dispositif de couplage sont connectés audit support de déplacement. Cette disposition vise à faciliter l'accès à la nacelle par une personne handicapée. Ainsi, avantageusement, l'invention prévoit qu'une déconnexion de chacun des supports de déplacement situés d'un même côté du véhicule soit possible, pour améliorer encore l'accès.

En outre, le système de liaison entre au moins une traverse et chacun des supports de déplacement correspondants peut comprendre un dispositif de suspension possédant un axe de suspension sensiblement transversal, lorsque le véhicule est en position neutre.

Selon une réalisation possible, depuis l'axe d'articulation de la nacelle en direction d'un support de déplacement, le système de liaison comprend, dans cet ordre, le pivot de direction, le pivot d'inclinaison, et le dispositif de suspension. Toutefois, cet agencement n'est pas limitatif.

On peut prévoir qu'au moins un système de liaison comprenne un cardan formant les axes d'inclinaison et de suspension ou, en variante, que les axes d'inclinaison et de suspension d'au moins un système de liaison soient dissociés, c'est-à-dire non réunis en une même pièce telle qu'un cardan.

En outre, le véhicule peut comprendre au moins un moteur électrique et une batterie apte à alimenter le moteur électrique.

Selon une réalisation possible, la nacelle comprend un cadre et un siège monté sur le cadre, le cadre comportant deux portions latérales reliées par une portion avant et une portion arrière, les portions avant et arrière s'étendant vers le haut par rapport aux portions latérales, l'axe d'articulation de la nacelle étant disposé au-dessus des portions latérales. Cette disposition, dans laquelle le châssis est constitué de traverses situées en partie supérieure de la nacelle, permet d'augmenter la garde au sol du véhicule, ce qui est très profitable en tout-terrain.

On décrit à présent, à titre d'exemples non limitatifs, plusieurs modes de réalisation possibles de l'invention, en référence aux figures annexées :
La figure la est une vue en perspective d'un véhicule selon un premier mode de réalisation de l'invention, le véhicule étant en position neutre ;
Les figures 1b, 1c, 1d, 1e et 1f sont des vues du véhicule de la figure 1a, respectivement en perspective arrière, selon une autre perspective arrière, de face, latérale et de dessus ;
Les figures 2a, 2b et 2c sont des vues du véhicule de la figure la lorsqu'il se déplace à plat en virage, sans force centrifuge, respectivement en perspective, de face, et de dessus ;
Les figures 3a, 3b et 3c sont des vues du véhicule de la figure la lorsqu'il se déplace à plat en virage, avec force centrifuge, respectivement en perspective, de face, et de dessus ;
Les figures 4a et 4b sont des vues du véhicule de la figure la lorsqu'il se déplace en dévers en ligne droite, respectivement en perspective et de face ;
Les figures 5a et 5b sont des vues du véhicule de la figure la lorsqu'il se déplace en dévers en virage, respectivement en perspective et de face ;
Les figures 6a et 6b sont des vues du véhicule de la figure la lorsqu'il se déplace en ligne droite, sur un terrain en dévers opposés entre l'avant et l'arrière, respectivement en perspective et de face ;
La figure 7 est une vue en perspective du véhicule de la figure la sur lequel les moyens de transmission avec le volant et le dispositif de couplage avec la nacelle ont été déconnectés de deux roues latérales ;
Les figures 8a, 8b, 8c, 8d, 8e, 8f et 8g sont des vues de face et en terrain plat du véhicule de la figure la respectivement en ligne droite, en virage sans force centrifuge, en virage avec force centrifuge, en ligne droite avec inclinaison, en ligne droite en dévers, en dévers en virage vers l'amont et en dévers en virage vers l'aval, pour illustrer le mécanisme qui permet de compenser le braquage induit par l'inclinaison de l'axe des pivots d'inclinaison ;
Les figures 9a à 9d sont des représentations schématiques partielles du véhicule de la figure 1a, montrant différents positionnements relatifs possibles du pivot de direction, du pivot d'inclinaison, et du dispositif de suspension ;
Les figures 10a et 10b, 11a et 11b sont des vues de détail du véhicule de la figure la illustrant plusieurs variantes de réalisation possibles du pivot d'inclinaison et du dispositif de suspension ;
Les figures 12a et 12b sont des vues de détail du véhicule de la figure la équipé d'un moteur, selon plusieurs variantes de réalisation possibles ;
Les figures 13a et 13b sont des vues en perspective d'un véhicule selon un deuxième mode de réalisation de l'invention, le véhicule étant respectivement en ligne droite en dévers et à plat dans un virage avec force centrifuge ;
La figure 14 est une vue en perspective d'un véhicule selon un troisième mode de réalisation de l'invention, le véhicule étant en position neutre ;
La figure 15 est une vue de détail du véhicule de la figure 14, montrant la jonction entre une traverse et un support glissant ;
Les figures 16a à 16d sont des vues en perspective du véhicule de la figure 14, respectivement sur un sol plat en virage sans force centrifuge, sur un sol plat en virage avec force centrifuge, en dévers en ligne droite avec le ski avant droit suivant une irrégularité du terrain, en ligne droite avec un terrain en dévers à l'avant et plat à l'arrière.

La figure la représente un premier mode de réalisation d'un véhicule 1 qui comprend :
- un châssis comportant une traverse avant 2 et une traverse arrière 3, formées par exemple d'un tube métallique, ici de section carrée ;
- deux supports de déplacement sur le sol, ici sous forme de roues, assemblés à chacune des traverses 2, 3, soit deux roues avant 4 et deux roues arrière 5 ;
- et une nacelle 10 destinée à recevoir au moins une personne ou une charge, montée sur le châssis.

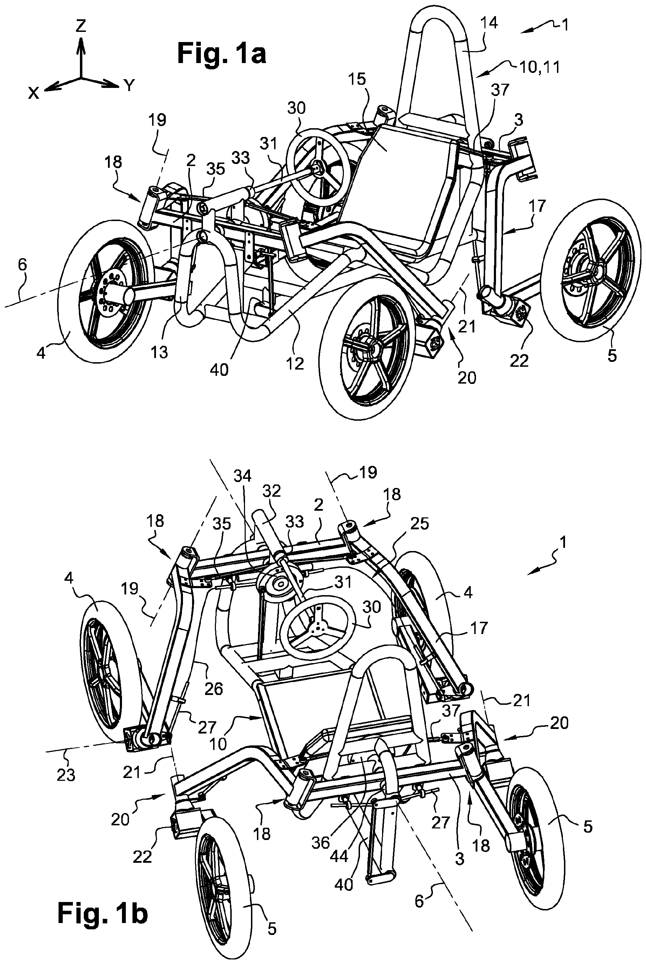

Sur la figure 1a, le véhicule 1 est représenté en position neutre, c'est-à-dire lorsqu'il repose sur une surface plate et horizontale et qu'il est à l'arrêt, les roues 4, 5 étant orientées pour que le véhicule 1 puisse se déplacer selon une ligne droite.

Dans un premier temps, le véhicule 1 va être décrit en référence à cette position neutre.

On définit la direction longitudinale X comme la direction longitudinale générale du véhicule 1, qui est donc sensiblement horizontale en position neutre. Les termes « avant » et « arrière » seront utilisés en référence à la direction X et à un déplacement du véhicule 1 en marche avant. On définit la direction transversale Y comme la direction orthogonale à X et qui est sensiblement horizontale en position neutre. Les termes « gauche », « droite », « latéral » et « transversal » seront employés en référence à la direction Y. Le terme « intérieur » est défini par rapport à un virage dans lequel est engagé le véhicule 1. Enfin, on définit la direction Z comme la direction orthogonale à X et Y, qui est donc sensiblement verticale en position neutre. Les termes « hauteur », « haut » et « bas » seront employés en référence à la direction Z.

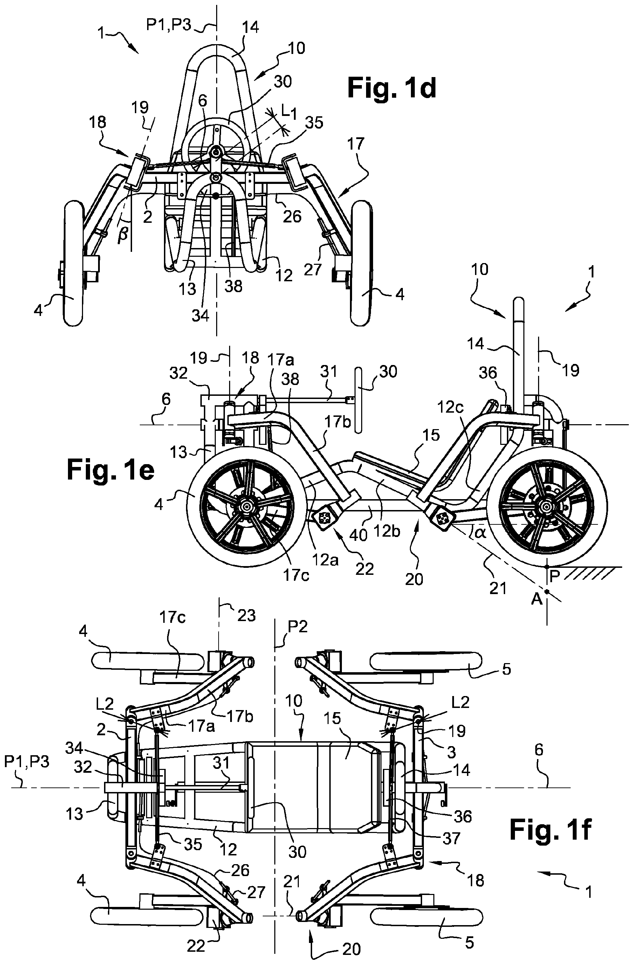

Le véhicule 1 présente un plan de symétrie longitudinal médian P1 parallèle à (X, Z), et un plan transversal médian P2, comme on le voit en particulier sur la figure 1f.

La nacelle 10 présente un plan longitudinal médian P3 qui, en position neutre du véhicule, est sensiblement confondu avec le plan longitudinal médian P1 du véhicule 1.

La nacelle 10 comprend un cadre 11 qui est ici réalisé à partir d'un tube métallique et est sensiblement symétrique par rapport au plan P1. Le cadre 11 comporte deux portions latérales 12 possédant la forme d'une ligne brisée ayant, de l'avant vers l'arrière, une partie avant 12a ascendante, une partie médiane 12b descendante, puis une partie arrière 12c ascendante (voir figure le). Les deux portions latérales 12 sont reliées par une portion avant 13 et une portion arrière 14 qui s'étendent vers le haut par rapport aux portions latérales 12 en ayant par exemple la forme d'un V inversé, la portion arrière 14 étant ici plus haute que la portion avant 13.

La nacelle 10 comprend également un siège 15 monté sur le cadre 11. Dans la réalisation illustrée sur la figure 1e, l'assise du siège 15 est sensiblement coplanaire à la partie médiane des portions latérales 12, tandis que le dossier du siège 15 est sensiblement coplanaire à la partie arrière des portions latérales 12. Le conducteur du véhicule 1, lorsqu'il est installé dans le siège 15, a les jambes sensiblement à l'horizontale et son dos est incliné vers l'arrière. D'autres réalisations sont toutefois envisageables.

La nacelle 10 est montée pivotante par rapport aux traverses 2, 3 autour d'un axe d'articulation 6 sensiblement longitudinal et situé sensiblement dans le plan P1. De plus, le centre de gravité de la nacelle 10 est situé sous l'axe d'articulation 6. De ce fait, la nacelle 10 peut se balancer autour de l'axe 6 comme un pendule, en fonction des mouvements du véhicule 1 et en particulier de la pente sur laquelle il se déplace et de la force centrifuge à laquelle il est soumis. La nacelle 10 peut trouver naturellement et instantanément son équilibre quelles que soient les forces de gravité et centrifuge qui lui sont appliquées.

Plus précisément, dans la réalisation représentée, l'axe d'articulation 6 passe sensiblement au centre de chacune des traverses 2, 3, et sensiblement au niveau de la pointe du V de la portion avant 13 de la nacelle 10. L'axe d'articulation 6 de la nacelle 10 est ainsi disposé au-dessus des portions latérales 12 du cadre 11.

Les traverses 2, 3 sont des pièces distinctes et ne sont liées entre elles que par la nacelle 10, via l'axe d'articulation 6. De ce fait, les traverses 2, 3 peuvent pivoter autour de l'axe d'articulation 6 indépendamment l'une de l'autre.

En outre, chacune des traverses 2, 3 possède deux parties extrêmes, chaque partie extrême étant connectée à une roue 4, 5 correspondante par un système de liaison.

Le système de liaison comprend un bras 17 articulé, dont une première extrémité est liée à une partie extrême d'une traverse 2, 3, et dont une deuxième extrémité est liée au moyeu de la roue 4, 5 correspondante. Le bras 17 peut être formé d'une succession de tubes métalliques - ici de section carrée - liés entre eux avec certains degrés de liberté, comme on va à présent le décrire.

Dans la réalisation représentée, qui n'est pas limitative, le bras 17 comporte, depuis la traverse 2, 3 en direction de la roue 4, 5, une première partie 17a globalement horizontale dirigée vers le plan P2 reliée par une zone coudée à une deuxième partie 17b s'étendant vers le plan P2 et vers le bas, puis une troisième partie 17c s'étendant sensiblement horizontalement vers le moyeu, en s'éloignant du plan P2.

Le système de liaison entre une traverse 2, 3 et une roue 4, 5 directrice comprend un pivot de direction 18 possédant un axe de direction 19 et permettant le braquage de ladite roue 4, 5. L'axe de direction 19 est situé sensiblement dans un plan (Y, Z) et est incliné vers le haut, en direction du plan P1, d'un angle β par rapport à la verticale (voir figure 1d). L'angle β est par exemple compris entre 10 et 30°. Cette configuration permet de garantir une bonne stabilité du véhicule 1. En pratique, le pivot de direction 18 peut être formé par un tube fixé à une extrémité de la première partie 17a du bras 17 et articulé dans un étrier solidaire d'une extrémité d'une traverse 2, 3.

Dans la réalisation de la figure 1a, chacune des quatre roues 4, 5 est directrice, le véhicule 1 comportant ainsi quatre pivots de direction 18. Cette réalisation n'est cependant pas limitative. Ainsi, on pourrait prévoir que seules les deux roues avant 4 soient directrices.

Le système de liaison entre une traverse 2, 3 et chacune des roues 4, 5 comprend de plus un pivot d'inclinaison 20 possédant un axe d'inclinaison 21, afin que, lorsque le véhicule 1 circule dans un virage, il se produise une inclinaison de chacune des roues 4, 5 vers l'intérieur du virage, sous l'effet de la force centrifuge. De plus, la présence du pivot d'inclinaison 20 permet la conservation de l'aplomb en dévers sous l'effet de la force de gravité.

L'axe d'inclinaison 21 s'étend dans un plan sensiblement parallèle à P1, en étant incliné vers le bas d'un angle α compris entre 5 et 45°, par rapport à l'horizontale, lorsque l'on se rapproche du point de contact P entre la roue 4, 5 et le sol (voir figure le). Selon une réalisation possible, l'angle α d'inclinaison de l'axe du pivot d'inclinaison est compris entre 20 et 40°, par exemple de l'ordre de 30°. De plus, le point A d'intersection avec la perpendiculaire au sol passant par ledit point de contact P entre la roue 4, 5 et le sol est ici situé sous ledit point de contact P.

Il s'ensuit que les roues 4, 5 s'inclinent automatiquement et proportionnellement à la force centrifuge vers l'intérieur d'un virage. En effet, avec cette configuration, non seulement le moment de la réaction du sol par rapport à l'axe du pivot d'inclinaison ne contrarie pas ce mouvement d'inclinaison, mais en plus il le provoque, sous l'effet de la force centrifuge.

Dans la réalisation représentée, le pivot d'inclinaison 20 est situé à l'intérieur de l'empattement, c'est-à-dire derrière les roues avant 4 et devant les roues arrière 5. De ce fait, l'axe d'inclinaison 21 est incliné vers le bas de l'arrière vers l'avant pour les roues avant 4, et vers le bas de l'avant vers l'arrière pour les roues arrière 5.

En pratique, le pivot d'inclinaison 20 peut être formé par un manchon fixé à une extrémité de la deuxième partie 17b du bras 17 engagé de façon pivotante sur un tube monté à une extrémité de la troisième partie 17c du bras 17.

Afin que le pivotement de la nacelle 10 autour de l'axe d'articulation 6 entraîne l'inclinaison des roues 4, 5 autour des axes d'inclinaison 21 et vice-versa, le véhicule 1 comprend un dispositif de couplage 25 entre la nacelle 10 et chacune des roues 4, 5.

Le dispositif de couplage 25 comprend ici des moyens souples de type câbles « push-pull » 26 associés, à leurs extrémités, à des tiges rigides 27 dont une extrémité est équipée d'une rotule.

Ainsi, la rotule d'une tige 27 est associée à un pivot d'inclinaison 20, par exemple en étant fixée à une patte solidaire du manchon fixé à une extrémité de la deuxième partie 17b du bras 17. En outre, la rotule de l'autre tige 27 est associée à la nacelle 10, dans le plan P1 (voir figure 1d). Il est à noter que, pour ne pas surcharger les dessins, les câbles 26 n'ont été représentés que sur la figure 1b et - d'un côté seulement - sur les figures 1d et 1f, les autres figures ne faisant apparaître que les tiges 27.

Un tel dispositif de couplage permet de réaliser facilement une transmission de mouvement linéaire entre des composants éloignés et d'orientation relative quelconque.

En variante, on pourrait prévoir que le dispositif de couplage 25 comprenne des moyens articulés avec composants rigides de type biellettes à rotules et basculeurs.

Le système de liaison entre une traverse 2, 3 et chacune des roues 4, 5 peut de plus comprendre un dispositif de suspension 22 possédant un axe de suspension 23 sensiblement transversal, lorsque le véhicule 1 est en position neutre. La présence d'un dispositif de suspension 22 permet aux roues 4, 5 du véhicule 1 de conserver le contact avec le terrain, notamment lorsque celui-ci est irrégulier, améliorant ainsi la tenue de route, la sécurité, et le confort du conducteur et des éventuels passagers.

Dans la réalisation représentée sur la figure 1a, le dispositif de suspension 22 est agencé entre la troisième partie 17c du bras 17 et le pivot d'inclinaison 20. D'autres réalisations sont toutefois possibles.

Le véhicule 1 comprend par ailleurs un volant 30 de direction monté sur la nacelle 10. Ainsi, le conducteur agissant sur le volant peut provoquer le braquage des roues 4, 5, par l'intermédiaire de moyens de transmission.

Dans la réalisation représentée, où les quatre roues 4, 5 sont directrices, le braquage des roues avant 4 est obtenu par le volant 30 et les moyens de transmission, et le braquage des roues arrière 5 est obtenu via un mécanisme de renvoi liant les moyens de transmission et des moyens de commande du braquage des roues arrière 5.

En outre, puisque les pivots d'inclinaison 20 ne sont pas horizontaux (en position neutre), le pivotement des roues 4, 5, en particulier dans un virage avec force centrifuge, conduit également à un braquage des roues. Or ceci n'est pas souhaitable, car les sensations de conduites seraient alors modifiées par rapport à un véhicule traditionnel, l'angle de rotation du volant ne correspondant pas à l'angle effectif de braquage des roues.

Ainsi, le véhicule 1 comprend un mécanisme permettant de corriger automatiquement ce braquage induit par l'inclinaison des roues 4, 5, tant à l'avant, au niveau des moyens de transmission entre le volant 30 et les roues avant 4, qu'à l'arrière, au niveau des moyens de commande du braquage des roues arrière 5. Un tel mécanisme devrait de préférence être présent à l'arrière même si les roues arrière 5 n'étaient pas directrices.

Ainsi, d'une part, les moyens de transmission comprennent une colonne de direction 31 dont l'extrémité arrière porte le volant 30 et dont l'extrémité avant est montée rotative dans un tube 32 d'axe longitudinal solidaire du cadre 11 de la nacelle 10. Sur la colonne de direction 31 est monté un pignon 33 qui engrène avec une roue dentée 34 montée libre en rotation sur la nacelle 10 autour de l'axe d'articulation 6.

La roue dentée 34 est ainsi entraînée en rotation par la colonne de direction 31, dans le sens inverse du volant 30. Elle permet à la fois de démultiplier le mouvement de rotation du volant 30 et de corriger le braquage induit, comme expliqué plus loin.

Les moyens de transmission comprennent également, pour chaque roue avant 4, une biellette de direction 35 présentant une première extrémité connectée à la roue dentée 34 à distance de l'axe d'articulation 6 et une deuxième extrémité connectée au système de liaison entre la roue 4 et la traverse 2. Plus précisément, la deuxième extrémité d'une biellette de direction 35 peut être connectée à une patte fixée sur la première partie 17a du bras 17, à proximité du pivot de direction 18. En position neutre du véhicule 1, les biellettes de direction 35 sont disposées symétriquement par rapport au plan P1.

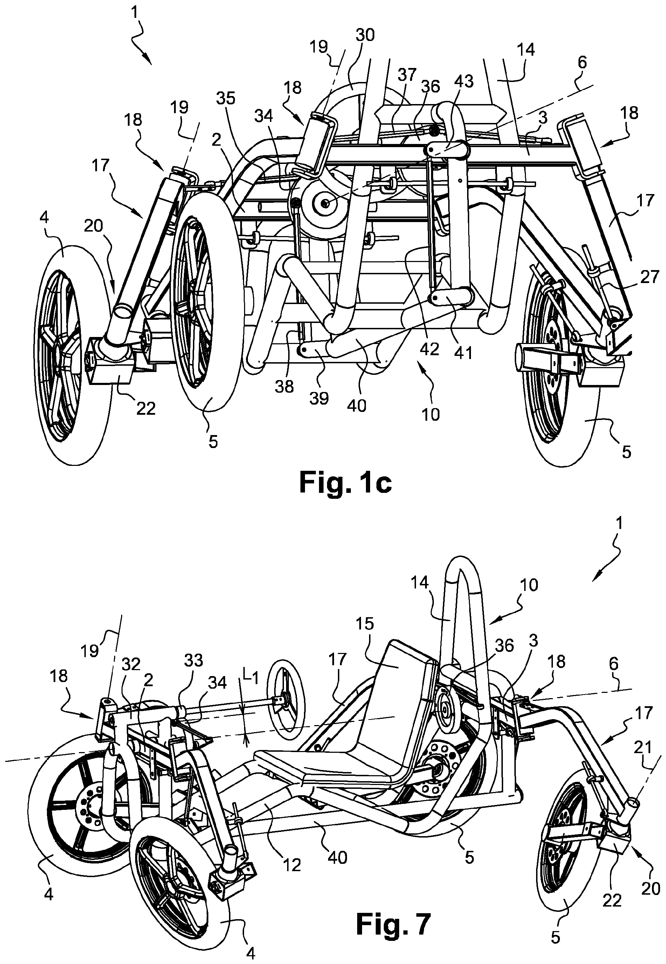

En pratique :
- comme illustré sur les figures 1d et 7, l'axe de la roue dentée 34 - c'est-à-dire l'axe d'articulation 6 de la nacelle 10 - est décalé par rapport à la première extrémité dune biellette de direction 35 d'une distance L1, qui correspond au bras de levier commandé par l'inclinaison de la nacelle 10 ;
- et, comme illustré sur la figure 1f, la deuxième extrémité d'une biellette de direction 35 et l'axe 19 du pivot de direction 18 correspondant sont espacés d'une distance L2 qui correspond au bras de levier commandant le braquage de la roue 4 concernée.

D'autre part, les moyens de commande du braquage des roues arrière 5 comprennent un disque 36 monté libre en rotation sur la nacelle 10 autour de l'axe d'articulation 6. Ce disque 36 est entraîné en rotation par la colonne de direction 31, dans le sens inverse du volant 30, via le mécanisme de renvoi. En variante, le disque 36 pourrait être remplacé par un simple levier.

Les moyens de commande du braquage des roues arrière 5 comprennent également, pour chaque roue arrière 5, une biellette de direction 37 présentant une première extrémité connectée au disque 36 à distance de l'axe d'articulation 6 et une deuxième extrémité connectée au système de liaison entre la roue 5 et la traverse 3. Par exemple, la deuxième extrémité d'une biellette de direction 37 peut être connectée à une patte fixée sur la première partie 17a du bras 17, à proximité du pivot de direction 18. En position neutre du véhicule 1, les biellettes de direction 37 sont disposées symétriquement par rapport au plan P1. En pratique, comme illustré sur la figure 1f, la deuxième extrémité d'une biellette de direction 37 et l'axe 19 du pivot d'inclinaison 18 correspondant sont espacés d'une distance L2 qui correspond au bras de levier commandant le braquage de la roue 4 concernée.

La connexion entre les extrémités des biellettes de direction 35, 37 et le composant correspondant peut se faire par une liaison rotule. Il est à noter que la géométrie des points d'ancrage des biellettes 35,37 permet de respecter les épures de direction traditionnelle (épures dites d'Akermann ou de Jeantaud).

Le mécanisme de renvoi, illustré sur la figure 1c, comporte une biellette avant de transmission 38 fixée à une première extrémité à la roue dentée 34 et à une deuxième extrémité sur une plaque avant 39, à une extrémité de celle-ci. L'autre extrémité de la plaque avant 39 est solidaire de l'extrémité avant d'un arbre longitudinal monté de façon pivotante dans un tube longitudinal 40 solidaire de la nacelle 10 et qui, ici, passe sous la nacelle 10.

Une première plaque arrière 41, solidaire de l'extrémité arrière de l'arbre longitudinal, est associée de façon similaire à l'extrémité inférieure d'une biellette arrière de transmission 42. Une deuxième plaque arrière 43 est associée d'une part à l'extrémité supérieure de la biellette arrière de transmission 42 et d'autre part à une extrémité d'un arbre monté rotatif dans un tube longitudinal 44 solidaire de la nacelle 10 et dont l'axe est confondu avec l'axe d'articulation 6. L'autre extrémité de cet arbre est fixée au disque 36.

Ainsi, le disque 36 est entraîné en rotation par le volant 30, de façon similaire à la roue dentée 34, dans le sens inverse du volant 30, via les éléments 31, 33, 34, 38, 39, 41, 42, 43. Il permet à la fois de démultiplier le mouvement de rotation du volant 30 et de corriger le braquage induit.

La correction du braquage induit vise à assurer que seul un mouvement relatif du volant 30 par rapport à la nacelle 10 produise un braquage effectif des roues 4, 5. A cet effet, des contraintes s'imposent d'une part sur le positionnement des biellettes de direction 35, 37, et d'autre part sur le sens de rotation de la roue dentée 34 et du disque 36 par rapport au sens de rotation du volant 30.

Pour une rotation quelconque du pivot d'inclinaison 20 et des roues 4, 5, le rapport entre la composante d'inclinaison de la roue et la composante du braquage induit de la roue est égal à cotan (a).

Ainsi, pour que le braquage induit par l'inclinaison des axes d'inclinaison 21, d'un angle a, soit compensé de façon sensiblement exacte par la création d'un braquage inverse, les distances L1 et L2 doivent respecter la relation suivante : L2 = cotan (α) x L1. Par exemple, pour un angle α=30°, on doit avoir L2 ≈ 1,73 L1. Pour L1 = 75 mm, on doit donc avoir L2 ≈ 130 mm.

Par ailleurs, de façon concrète, dans la réalisation représentée où les pivots d'inclinaison 20 sont situés à l'intérieur de l'empattement, la roue dentée 34 et le disque 36 doivent tourner dans le sens inverse du volant 30.

Dans une variante de réalisation non représentée où les pivots d'inclinaison 20 seraient situés à l'extérieur de l'empattement, la roue dentée 34 et le disque 36 devraient tourner dans le même sens que le volant 30. Par exemple, la roue dentée 34 pourrait être associée à la colonne de direction 31 via une chaîne.

Le fonctionnement du mécanisme de correction du braquage induit sera exposé plus en détail plus loin.

Il est à noter que, afin de ne pas surcharger les dessins, une figure donnée ne fait pas nécessairement apparaître l'ensemble des composants précédemment décrits du véhicule 1.

En ligne droite, comme sur les figures la à 1f, l'autostabilité du véhicule 1 est assurée par l'effet pendulaire de la nacelle 10, éventuellement lestée, et par l'inclinaison d'un angle β des pivots de direction 18. Les traverses 2, 3 sont sensiblement parallèles entre elles et au sol.

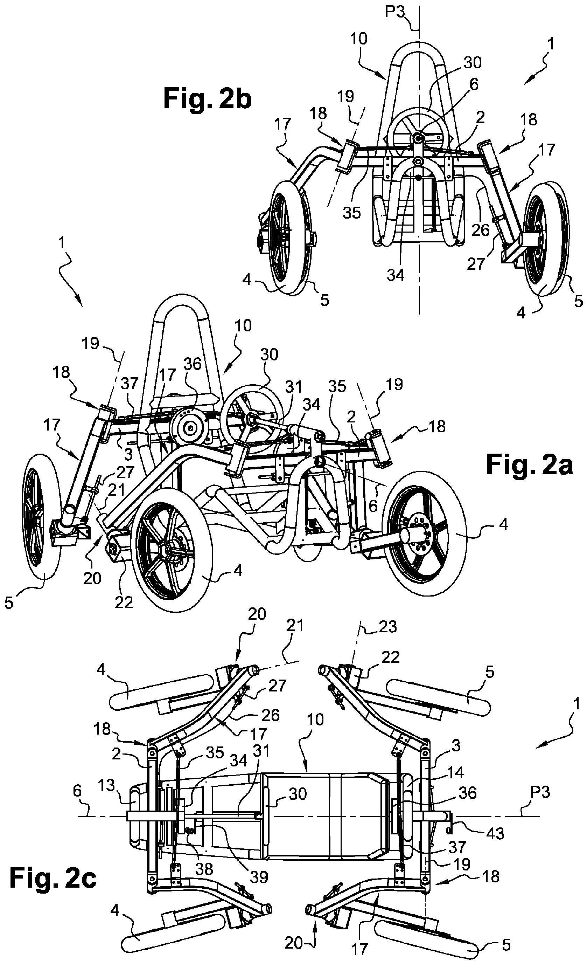

Le véhicule 1 se déplaçant à plat en virage (courbe à gauche), sans force centrifuge, est représenté sur les figures 2a, 2b et 2c.

Dans ce cas, la rotation du volant 30 provoque le braquage des roues avant 4 par l'intermédiaire des moyens de transmission, et le braquage des roues arrière 5 par l'intermédiaire des moyens de transmission, du mécanisme de renvoi, et des moyens de commande du braquage arrière. En l'absence de force centrifuge, la nacelle 10 ne pivote pas et reste donc parallèle au sol, tout comme les traverses 2, 3.

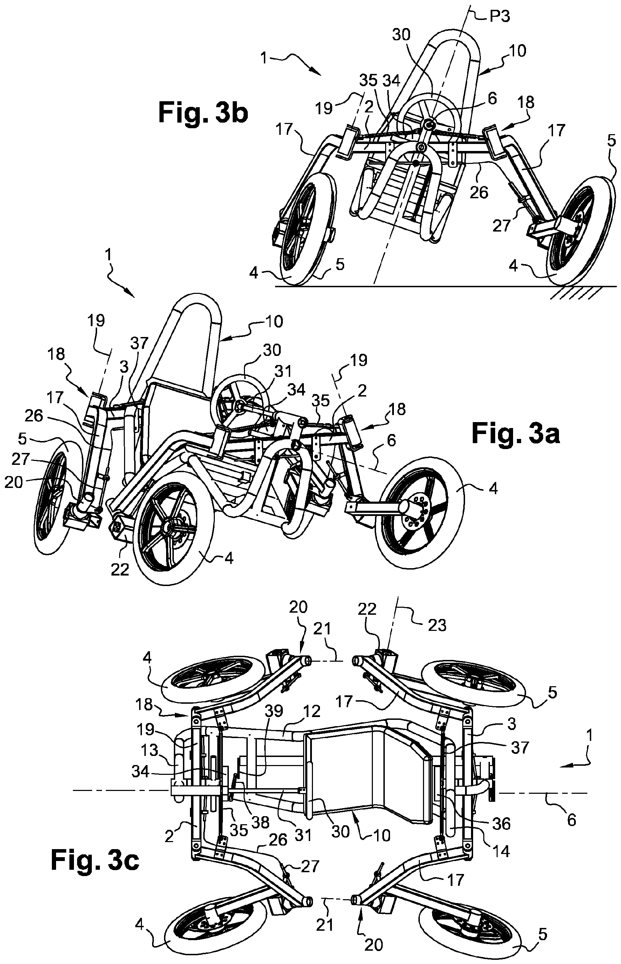

Le véhicule 1 se déplaçant à plat en virage (courbe à gauche), avec force centrifuge, est représenté sur les figures 3a, 3b et 3c.

Du fait de la force centrifuge, fonction du rayon du virage et de la vitesse, la nacelle 10 pivote autour de l'axe d'articulation 6 vers l'intérieur du virage. Ce pivotement est obtenu par effet de pendule, le centre de gravité de la nacelle 10 étant situé en dessous de l'axe d'articulation 6. Le plan longitudinal médian P3 de la nacelle 10 n'est donc plus vertical. En outre, sous l'effet de la force centrifuge, les quatre roues 4, 5 s'inclinent également vers l'intérieur du virage, sensiblement du même angle que la nacelle 10, d'une part du fait de l'agencement de l'axe 21 du pivot d'inclinaison 20, comme expliqué précédemment, et d'autre part par l'intermédiaire des dispositif de couplage 25 à la nacelle 10.

Ainsi, la nacelle 10 et les roues 4, 5 sont inclinées du même angle par rapport au châssis et au sol, qui est l'angle de la résultante des forces appliquées. En revanche, les traverses 2, 3 restent sensiblement parallèles entre elles et au sol.

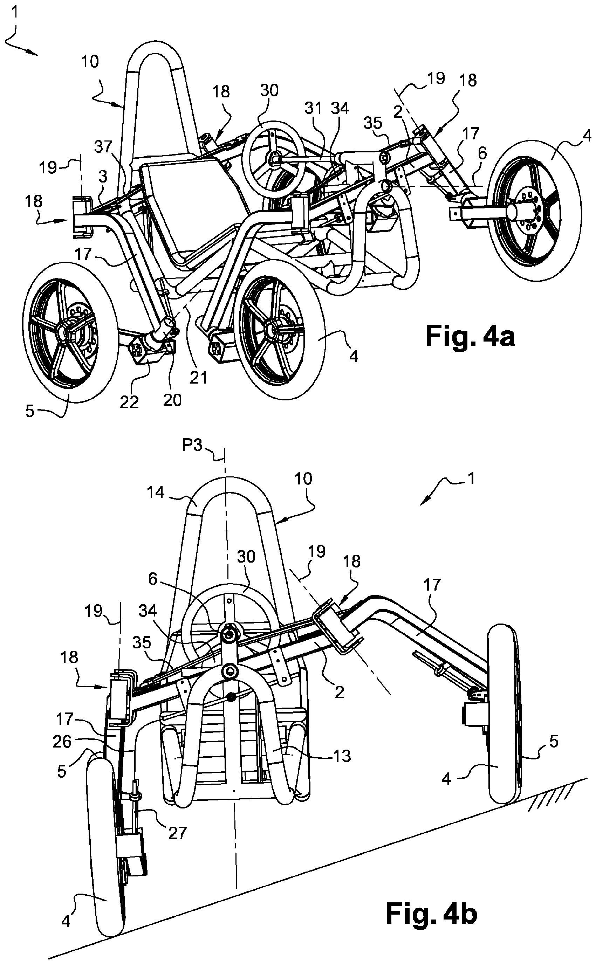

Le véhicule 1 se déplaçant en dévers en ligne droite est représenté sur les figures 4a et 4b.

La nacelle 10, montée pivotante autour de l'axe d'articulation 6 et ayant son centre de gravité situé sous ledit axe d'articulation 6, s'incline par effet de pendule. Le plan longitudinal médian P3 de la nacelle 10 reste donc sensiblement vertical. Les roues 4, 5 sont inclinées du même angle par rapport au châssis et au sol, qui est l'angle de la résultante des forces appliquées. Elles sont donc sensiblement parallèles au plan P3. Les traverses 2, 3, quant à elles, sont sensiblement parallèles entre elles et au sol.

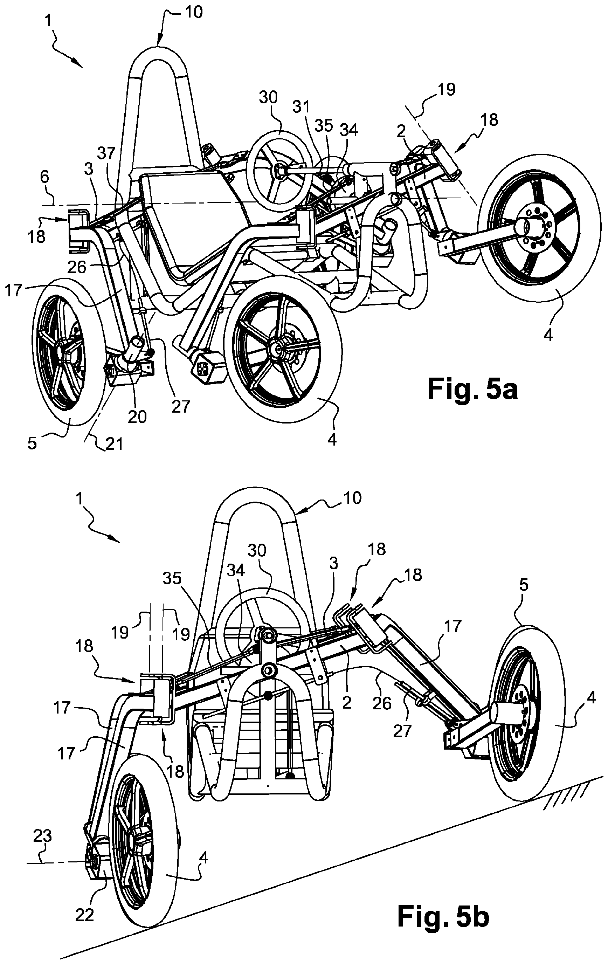

Le véhicule 1 se déplaçant en dévers en virage est représenté sur les figures 5a et 5b.

Là encore, le plan longitudinal médian P3 de la nacelle 10 est sensiblement vertical, et les roues 4, 5 sont sensiblement dans un plan vertical, en étant toutefois braquées (ici, vers l'amont). Les traverses 2, 3 restent sensiblement parallèles entre elles et au sol.

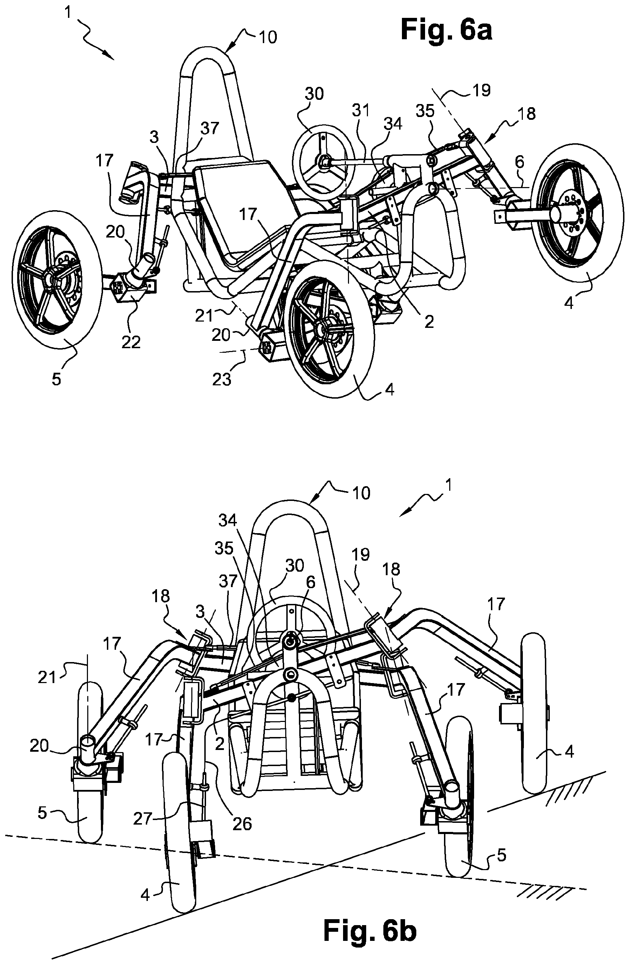

Enfin, le véhicule 1 se déplaçant en ligne droite, sur un terrain en dévers opposés entre l'avant et l'arrière, est représenté sur les figures 6a et 6b.

Le plan longitudinal médian P3 de la nacelle 10 reste sensiblement vertical, et les roues 4, 5 sont sensiblement parallèles au plan P3. En outre, une traverse donnée est sensiblement parallèle au sol au niveau des roues concernées. De ce fait, dans ce cas avec des dévers opposés, les traverses avant et arrière 2, 3 ne sont plus parallèles entre elles. Ceci est rendu possible par leur indépendance en rotation autour de l'axe d'articulation 6.

Le véhicule 1 selon l'invention est donc particulièrement intéressant dans les terrains accidentés, comportant d'importantes irrégularités de terrain (creux, etc.) et/ou des dévers variables. En effet, le fait d'avoir des traverses indépendantes en rotation permet au véhicule de se déplacer aisément sur ce type de terrain, en assurant un contact constant de chacune des quatre roues avec le sol. La présence de suspensions renforce encore cette bonne tenue quel que soit le terrain. De plus, la nacelle restant verticale, la sécurité et le confort du conducteur, des passagers et/ou des charges transportées sont également assurés.

Cette capacité du véhicule à compenser les dévers dans les terrains inclinés offre des applications en terrain escarpé pour les véhicules utilitaires (agricole, forestier, militaire) ou de loisir (en particulier dans les stations de montagne).

Un autre avantage lié au fait que les traverses 2, 3 ne sont liées que via l'axe d'articulation 6, et non via des longerons, est l'accessibilité du véhicule 1 pour une personne handicapée.

A cet effet, on peut prévoir que, pour la roue avant 4 et la roue arrière 5 situées d'un même côté du véhicule 1, les biellettes de direction 35, 37 et les dispositifs de couplage 25 puissent être assemblés de façon amovible à ces roues. Ainsi, après avoir temporairement déconnecté ces roues, on peut les faire pivoter autour des axes 19 au-delà du pivotement autorisé en position connectée. Comme illustré sur la figure 7, ceci permet de libérer l'accès à la nacelle 10 latéralement, cet accès n'étant pas entravé par des longerons.

Ainsi, une personne handicapée peut passer latéralement d'un fauteuil roulant à la nacelle 10, et vice-versa. Un redressement du siège 15 et du volant 30 peut être prévu pour améliorer encore la facilité d'accès. Il est à noter que le pivotement des roues libérant l'accès de la nacelle ne requiert pas d'effort et peut être facilement effectué par une personne handicapée depuis son fauteuil ou depuis le siège 15.

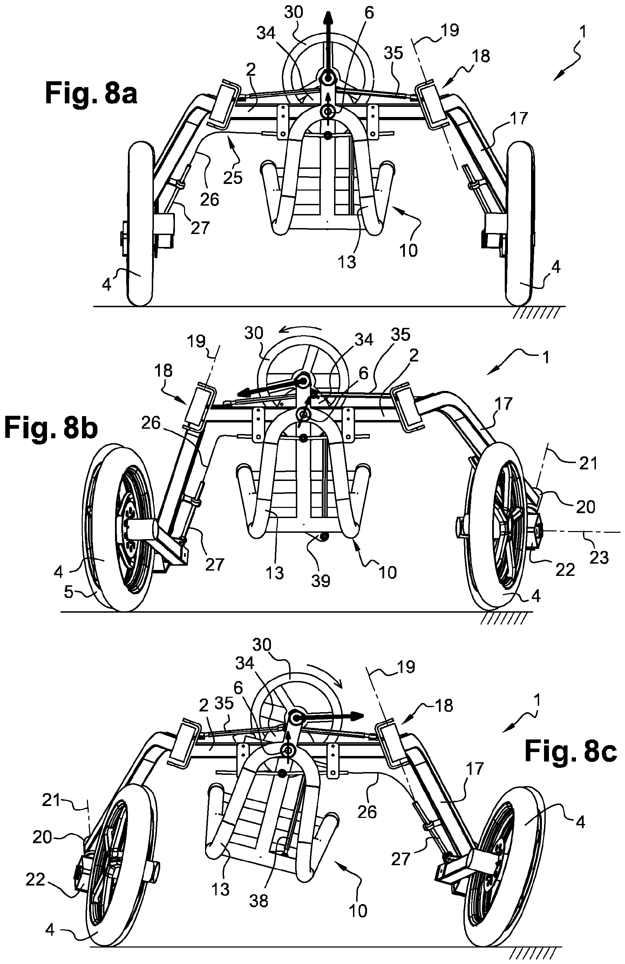

On va à présent expliquer plus en détail le mécanisme de correction du braquage induit, en référence aux figures 8a à 8g.

Sur la figure 8a, le véhicule 1 est en terrain plat et en ligne droite. La nacelle 10 et les roues 4, 5 sont d'aplomb. Le volant 30 est droit par rapport à la nacelle 10 et au conducteur et par rapport au sol. La roue dentée 34 est droite par rapport à la nacelle 10 et au conducteur et par rapport au sol, et n'apporte aucune correction.

Sur la figure 8b, le véhicule 1 est en terrain plat et en virage à droite, sans force centrifuge.

La nacelle 10 et les roues 4, 5 sont d'aplomb. Le volant 30 est tourné vers la droite. La roue dentée 34, dont le sens de rotation est inverse de celui du volant, est tounée vers la gauche. Les roues 4, 5 sont braquées vers la droite du fait de la rotation de la roue dentée 34, correspondant à la rotation du volant 30.

Les roues 4, 5 n'ont pas pivoté autour de l'axe 19 donc il n'y a pas de braquage induit. La nacelle 10 n'ayant pas pivoté, aucune correction de l'angle de braquage n'a été apportée. Donc le braquage réel des roues 4, 5 correspond bien à la commande de braquage que le conducteur a appliquée au volant 30.

Sur la figure 8c, le véhicule 1 est en terrain plat et en virage à gauche, avec force centrifuge.

La nacelle 10 et les roues 4, 5 sont inclinées selon les plans d'équilibre des forces. Le volant 30 est tourné vers la gauche, la roue dentée 34 est tournée vers la droite par rapport à la nacelle 10, et les roues 4, 5 sont braquées vers la gauche.

L'inclinaison des roues 4, 5 produit un sur-braquage induit à gauche, mais l'inclinaison de la nacelle 10 provoque une rotation de la roue dentée vers la gauche par rapport au plan du sol et produit un contre braquage induit, sans que la position du volant 30 ait changé par rapport au conducteur et à la nacelle 10. En effet, l'action de la roue dentée 34 sur les biellettes de direction 35 a été réduite par l'inclinaison de la nacelle 10, ce qui a compensé le braquage induit par les pivots d'inclinaison 20.

Le cas particulier illustré, où la roue dentée 34 est droite par rapport au châssis, c'est-à-dire aux traverses 2, 3, est celui où l'angle de braquage correspond à celui qui est généré par l'angle des pivots d'inclinaison 18 des roues 4, 5: la roue dentée 34 n'a pas agit sur la direction, les bras 17 sont restés en position symétrique, mais le volant 30 est bien tourné selon la braquage des roues 4, 5.

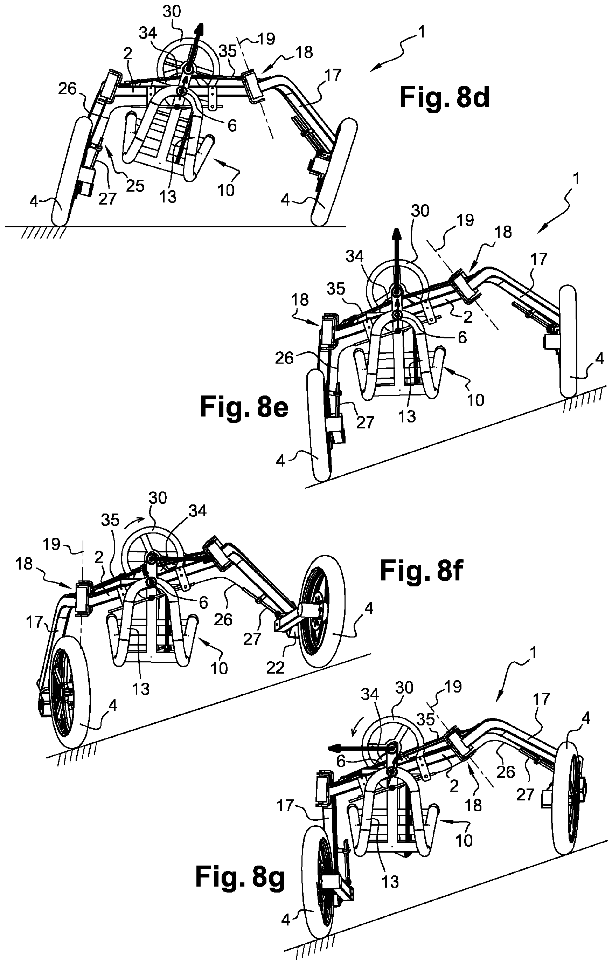

Sur la figure 8d, le véhicule 1 est en ligne droite, avec inclinaison, cette configuration ne se produisant qu'en cas de vent latéral violent ou ponctuellement en fin de virage : la nacelle 10 et les roues 4, 5 sont inclinées selon les plans d'équilibre des forces, le volant 30 est tourné par rapport au sol mais est droit par rapport à la nacelle 10 et au conducteur. La roue dentée 34 est tournée par rapport au sol mais pas par rapport à la nacelle 10. Les roues 4, 5 ne sont pas braquées. Ainsi, la rotation de la roue dentée 34 par rapport au châssis a compensé le braquage induit par l'inclinaison des pivots d'inclinaison 18 mais le volant 30 n'est pas braqué pour le conducteur.

Sur la figure 8e, le véhicule 1 est en ligne droite en dévers, il est très important que la variation d'inclinaison des roues 4, 5 et de la nacelle 10 par rapport au sol ne modifie pas la trajectoire choisie par le conducteur. En ligne droite et en dévers, la nacelle 10 et les roues 4, 5 sont d'aplomb. Le volant 30 et la roue dentée 34 sont droits par rapport à la nacelle 10 et au conducteur mais tournés par rapport au châssis. Le roues 4, 5 ne sont pas braquées. Le braquage induit par l'angle sur l'horizontale des pivots d'inclinaison 19 est compensé par la rotation par rapport au châssis - c'est-à-dire par rapport aux traverses 2, 3 - et au sol de la roue dentée 34. Ainsi, par exemple, dans un dévers amont à droite, la nacelle 10 reste horizontale et les roues 4, 5 verticales alors que les traverses 2, 3 sont parallèles au sol. L'inclinaison relative des roues 4, 5 par rapport au sol et par rapport à leurs bras 17 génère un braquage induit vers l'amont mais l'inclinaison relative de la nacelle 10 provoque une rotation de la roue dentée 34 vers la droite par rapport au plan du sol donc un contre braquage vers l'aval. Le volant 30 et la roue dentée 34 restent en position droite : il n'y a aucune variation de trajectoire dans un passage en dévers et le véhicule roule en ligne droite si le conducteur maintient le volant 30 droit (par rapport à lui-même). Bien entendu, une action sur le volant 30 permet au conducteur de s'orienter à sa guise vers la droite ou vers la gauche dans une situation en dévers.

Sur la figure 8f, le véhicule 1 est en dévers et effectue un virage vers l'amont : la nacelle 10 et les roues 4, 5 sont d'aplomb, le volant 30 est tourné vers l'amont par rapport à la nacelle 10 et au conducteur, et la roue dentée 34 est tournée vers l'aval par rapport à la nacelle 10. Les roues 4, 5 sont braquées vers l'amont.

Sur la figure 8g, le véhicule 1 est en dévers et effectue un virage vers l'aval : la nacelle 10 et les roues 4, 5 sont d'aplomb, le volant 30 est tourné vers l'aval par rapport à la nacelle 10 et au conducteur, et la roue dentée 34 est tournée vers l'amont par rapport à la nacelle 10. Le roues 4, 5 sont braquées vers l'aval.

Ainsi, c'est l'inclinaison de la nacelle 10 qui permet de corriger le braquage induit, via la roue dentée 34. La rotation du volant 30 par rapport à la nacelle 10 sur laquelle il tourne est donc seule génératrice d'un braquage effectif. Les sensations de conduite connues sur une voiture sont ainsi conservées (sensation de braquage par rapport à la nacelle 10 et non par rapport au sol). De façon générale, lorsqu'il n'y a pas de rotation relative du volant 30 et de la nacelle 10, il en résulte des roues 4, 5 droites et une trajectoire rectiligne, quelle que soit la configuration.

La rotation du disque 36 étant la même que celle de la roue dentée 34, via le mécanisme de renvoi, on obtient également une correction du braquage induit au niveau des roues arrière 5.

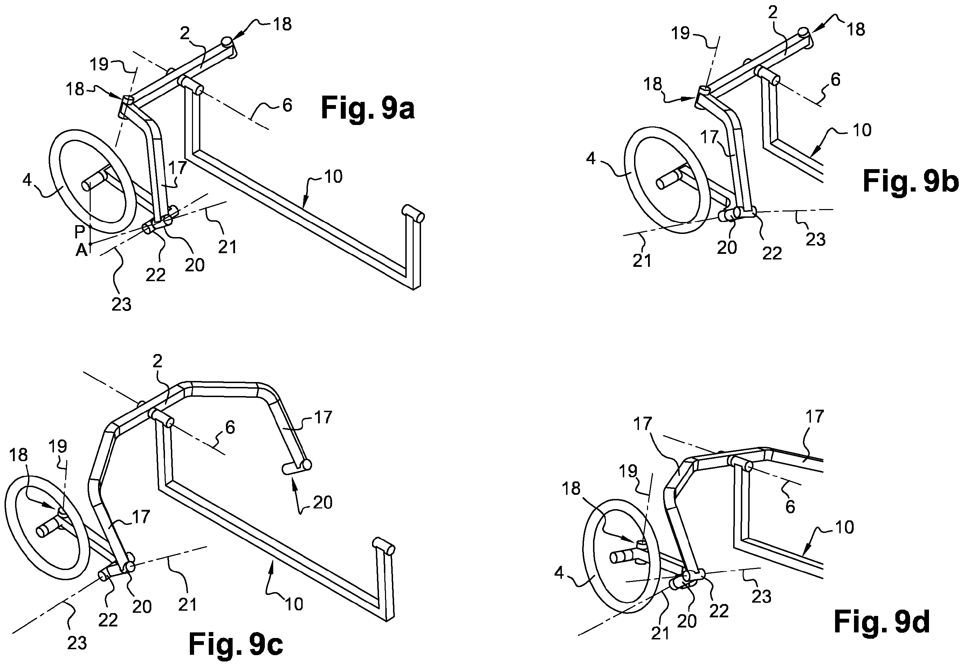

Comme illustré schématiquement sur la figure 9a, dans le système de liaison précédemment décrit, les différents éléments sont positionnés dans cet ordre, depuis l'axe d'articulation 6 de la nacelle 10 en direction d'une roue 4, 5 : pivot de direction 18, pivot d'inclinaison 20, puis dispositif de suspension 22.

Toutefois, d'autres agencements sont possibles.

Ainsi, sur la figure 9b, l'ordre est le suivant : pivot de direction 18, dispositif de suspension 22, puis pivot d'inclinaison 20. Sur la figure 9c, l'ordre est le suivant : pivot d'inclinaison 20, dispositif de suspension 22, puis pivot de direction 18. Et sur la figure 9d, l'ordre est le suivant : dispositif de suspension 22, pivot d'inclinaison 20, puis pivot de direction 18.

Dans tous les cas, l'axe d'inclinaison 21 passe sous le point de contact P de la roue 4, 5 avec le sol.

Lorsque l'axe d'inclinaison 21 est disposé avant l'axe de suspension 23, la distance de l'axe d'inclinaison 21 au point de contact P de la roue 4, 5 avec le sol varie en fonction du débattement de la suspension 22, ce qui a pour effet de faire varier le moment pendulaire appliqué à la roue 4, 5 par la réaction d'appui du sol. Plus la roue 4, 5 est chargée, plus son moment pendulaire est important en raison d'une part de l'augmentation du bras de levier, d'autre part de l'augmentation de la réaction du sol. En revanche, l'angle de l'axe d'inclinaison 21 ne varie pas par rapport au sol, donc le braquage induit généré par l'inclinaison de la roue 4, 5 ne varie pas, ce qui permet de le compenser plus facilement.

Cette configuration peut être avantageuse pour une application routière qui exige une épure de direction précise, mais elle peut également être pertinente pour une application tout-terrain car le levier pendulaire sera plus important sur les roues les plus chargées, qui sont aussi celles qui génèrent la plus grande réaction du sol.

A l'inverse, lorsque l'axe d'inclinaison 21 est disposé après l'axe de suspension 23, la distance de l'axe d'inclinaison 21 au point de contact P de la roue avec le sol ne varie pas en fonction du débattement du dispositif de suspension 22, et le moment pendulaire appliqué à la roue 4, 5 non plus. En revanche, l'angle de l'axe d'inclinaison 21 varie par rapport au sol, donc le braquage induit généré par l'inclinaison de la roue 4, 5 varie, ce qui rend plus difficile de le compenser rigoureusement.

Cette configuration peut être avantageuse pour une application en tout-terrain quand le débattement de suspension est important et que le moment pendulaire (notamment en dévers) prime sur la précision de l'épure de direction.

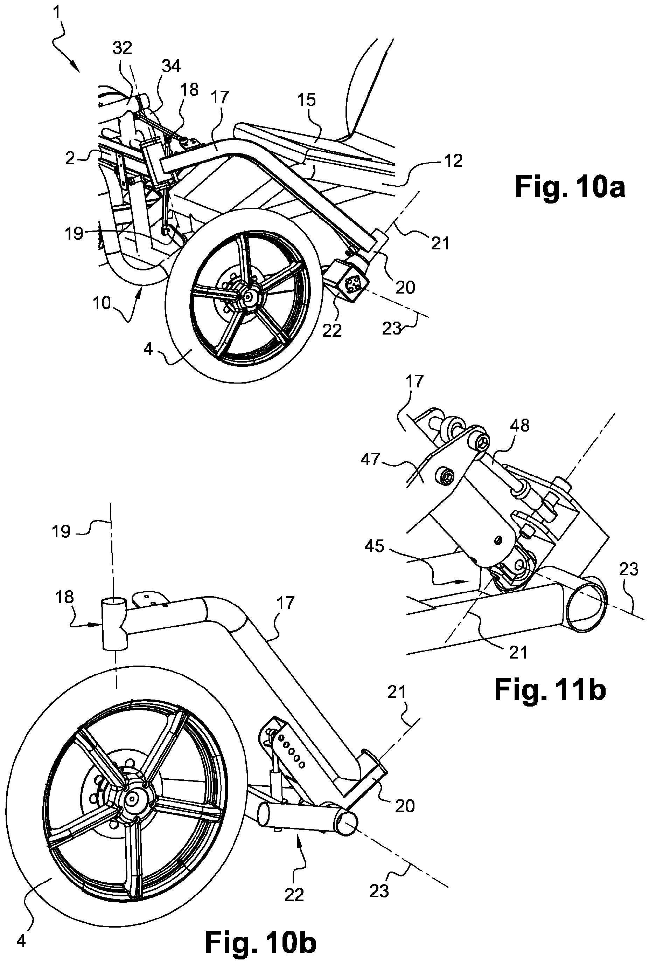

De façon concrète, les axes 21 du pivot d'inclinaison 20 et 23 du dispositif de suspension 22 peuvent être dissociés, comme illustré sur les figures 10a et 10b.

Sur la figure 10a, le dispositif de suspension 22 est composé d'un élément de suspension à élastomère à axe transversal 23, et il est situé après le pivot d'inclinaison 20 (en direction de la roue).

Sur la figure 10b, le dispositif de suspension 22 est composé d'un combiné ressort-amortisseur de suspension équipé de rotules à ses extrémités pour permettre l'inclinaison de la roue 4, 5. Le dispositif de suspension 22 est également situé après le pivot d'inclinaison 20 (en direction de la roue).

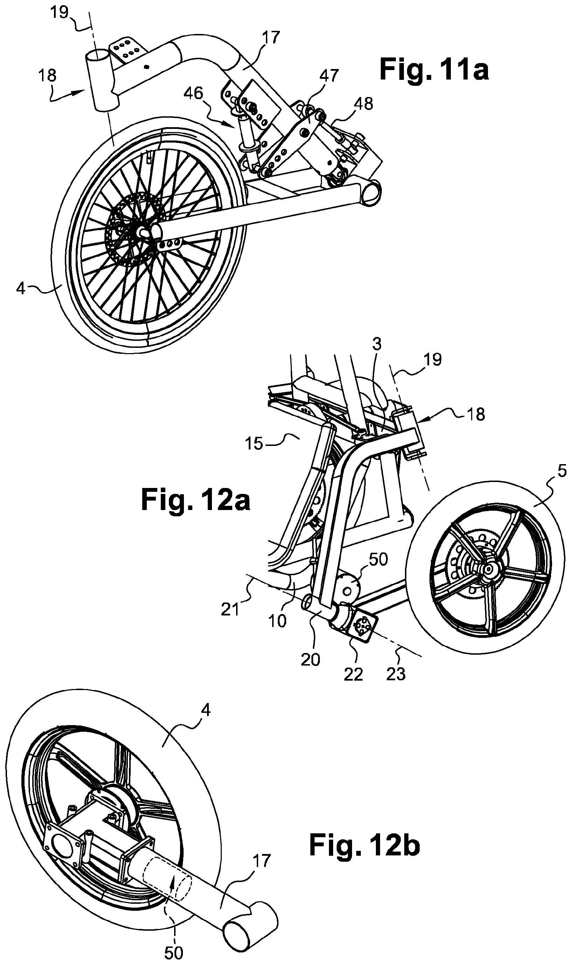

De façon alternative, les axes d'inclinaison 21 et de suspension 23 peuvent être associés et sécants, typiquement au moyen d'un cardan 45, comme sur les figures 11a et 11b, qui est une vue de détail agrandie de la figure 11a. L'axe du cardan 45 situé dans le plan longitudinal assure la fonction d'inclinaison de la roue 4, 5 et est incliné sur l'horizontale pour passer en dessous du point de contact P de la roue 4, 5 avec le sol.

Le cardan 45 peut être disposé, simplement en le tournant d'un quart de tour, selon une configuration où l'axe d'inclinaison 21 est en amont, ou en aval, de l'axe de suspension 23, selon le résultat souhaité.

Dans la disposition illustrée sur les figures 11a et 11b, l'axe d'inclinaison 21 est situé en amont de l'axe de suspension 23. Un bras 17 est monté sur le cardan 45, avec un combiné ressort-amortisseur de suspension 46 actionné par un basculeur 47 et un tirant 48 équipé de rotules à ses extrémités permettant l'inclinaison de la roue 4, 5. Il est à noter que l'axe sur lequel est fixée la rotule inférieure du tirant est aligné sur l'axe d'inclinaison 21du cardan 45, afin que les forces appliquées ne perturbent pas la liberté d'inclinaison pendulaire de la roue 4, 5.

Cette disposition permet au dispositif de suspension 22 de s'adapter automatiquement à la charge sur la roue : la roue intérieure (ou amont dans un dévers) qui est la moins chargée a ainsi un tarage de suspension plus souple que celui de la roue extérieure (ou aval).

En outre, comme illustré sur les figures 12a et 12b, le véhicule 1 peut être équipé d'une motorisation.

L'intégration d'une motorisation et de sa transmission soulève deux difficultés :
- le mouvement doit être transmis à une roue articulée selon trois axes (direction, inclinaison et suspension), ce qui suppose que la transmission suive les mouvements correspondants ;
- le poids du moteur et de la transmission contrarie l'effet pendulaire s'il est appliqué au dessus de l'axe d'inclinaison 21.

De préférence, la motorisation est électrique et le véhicule 1 comprend de plus une batterie (non représentée) pour alimenter le moteur électrique. On peut prévoir un moteur sur chaque roue motrice.

Selon une première variante de réalisation, non représentée, le moteur peut être intégré dans le moyeu, ce qui supprime tout problème de transmission puisqu'il suit les déplacements angulaires de la roue. En revanche, le moteur génère alors un moment contre-pendulaire égal au minimum au produit de son poids par le rayon de la roue. Pour résoudre ce problème, il est nécessaire d'augmenter les facteurs d'effet pendulaire, notamment en faisant passer l'axe d'inclinaison 21 des roues nettement en dessous du point de contact P entre la roue et le sol.

Selon une deuxième variante de réalisation, illustrée sur la figure 12a, le moteur 50 est disposé transversalement et transmet son mouvement par une chaîne ou une courroie (non représentée). Il est disposé le plus près possible de l'axe d'inclinaison 21 de la roue 4, 5 pour réduire le moment contre-pendulaire.

Selon une troisième variante de réalisation, illustrée sur la figure 12b, le moteur est intégré dans le bras 17. Le moteur 50 est disposé longitudinalement à l'intérieur du bras 17 avec un réducteur coaxial et un renvoi d'angle. L'intégration est très satisfaisante et le moment contre-pendulaire est réduit par rapport au cas du moteur-roue.

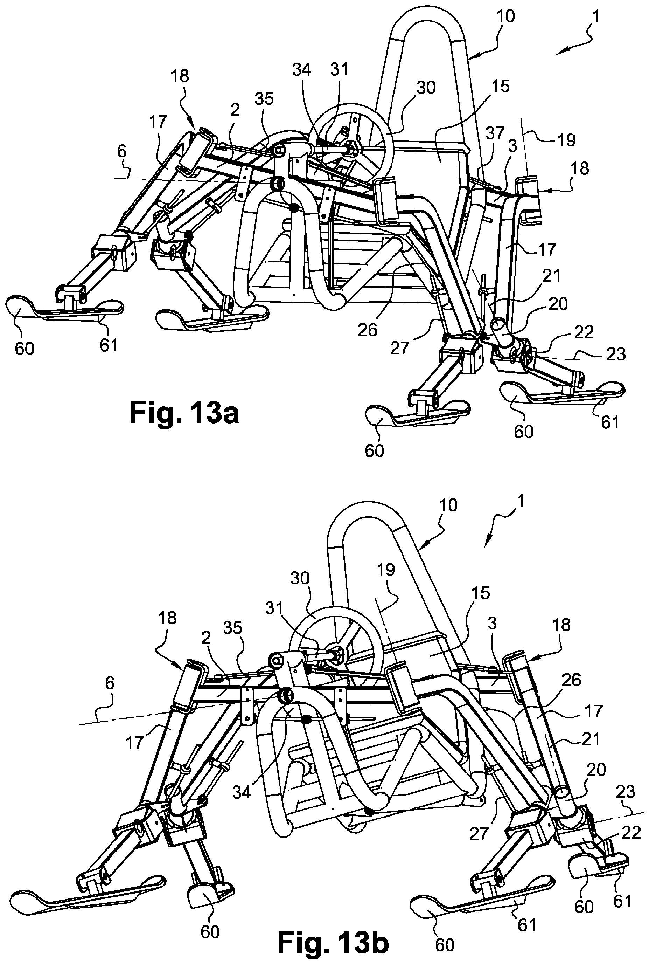

Les figures 13a et 13b illustrent un véhicule 1 selon un deuxième mode de réalisation de l'invention.

Ce véhicule 1 diffère de celui précédemment décrit essentiellement par le fait que les supports de déplacement ne sont plus des roues mais des supports aptes à glisser sur une surface enneigée, ici des skis 60, c'est-à-dire des éléments sensiblement plats pouvant avoir une partie avant relevée en spatule. En outre, le véhicule 1 comprend, de préférence sous chacun des skis 60, un organe d'accrochage 61 qui fait saillie des skis 60 vers le bas, et qui est conçu pour pouvoir s'enfoncer dans la neige et empêcher le dérapage latéral du véhicule 1.

Le comportement du véhicule 1 sur les différents types de terrain est identique à ce qui a été précédemment décrit.

En particulier, en dévers (figure 13a), la nacelle 10 s'incline par effet de pendule autour de l'axe d'articulation 6, son plan longitudinal médian P3 restant donc sensiblement vertical. Les skis 60 s'inclinent du même angle par rapport au châssis et au sol, leur plan longitudinal médian étant ainsi parallèle au plan P3 et non perpendiculaire au sol. Les traverses 2, 3, quant à elles, sont sensiblement parallèles entre elles et au sol.

Par ailleurs, en virage avec force centrifuge (figure 13b), la nacelle 10 pivote autour de l'axe d'articulation 6 vers l'intérieur du virage, son plan longitudinal médian P3 n'étant plus vertical. En outre, sous l'effet de la force centrifuge, les quatre skis s'inclinent également vers l'intérieur du virage, sensiblement du même angle que la nacelle 10, d'une part du fait de l'agencement de l'axe 21 du pivot d'inclinaison 20 - passant sous le point de contact entre les skis 60 et le sol - et d'autre part par l'intermédiaire des dispositif de couplage 25 à la nacelle 10. En revanche, les traverses 2, 3 restent sensiblement parallèles entre elles et au sol.

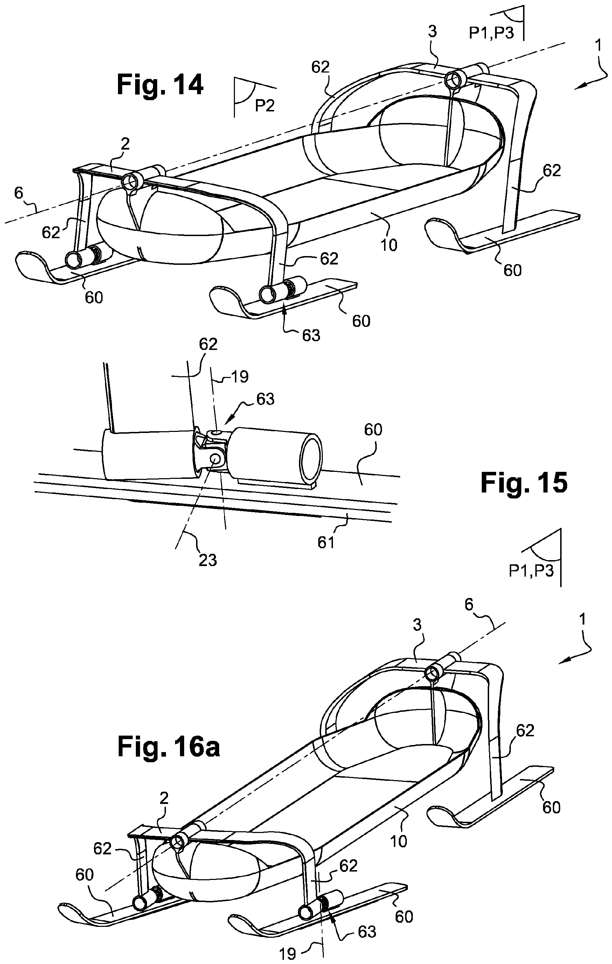

On se réfère à présent aux figures 14 à 16d qui illustrent un véhicule selon un troisième mode de réalisation de l'invention.

Le véhicule 1 est dans ce cas un traîneau, destiné à être tracté par un engin ou une personne, et à se déplacer sur une surface enneigée. Il ne comporte pas de motorisation.

Ainsi, les supports de déplacement ne sont pas des roues mais des skis 60 aptes à se déplacer sur la neige et équipés d'organes d'accrochage 61 pouvant s'enfoncer dans la neige et empêcher le dérapage latéral du véhicule 1.

Les caractéristiques du véhicule selon le troisième mode de réalisation qui diffèrent du premier mode de réalisation sont exposées ci-après.

La nacelle 10 est destinée à recevoir des enfants, une personne blessée en position allongée, ou une charge. Elle est par exemple constituée d'une coque en matériau synthétique. La nacelle 10 peut être assemblée de façon amovible aux traverses 2, 3, de façon à pouvoir être héliportée ou utilisée comme brancard, indépendamment du châssis.

Dans la réalisation représentée, seuls les deux skis avant 60 sont directeurs, les skis arrière 60 étant fixés à la traverse arrière 3 sans possibilité de mouvement relatif. Toutefois, une version avec quatre skis directeurs, ou au contraire aucun ski directeur, est également envisageable.

Les traverses 2, 3 sont prolongées à leurs extrémités latérales par des bras 62 sensiblement verticaux - en position neutre du véhicule 1- solidaires de la traverse correspondante. Une traverse 2, 3 et ses bras 62 forment ainsi un ensemble rigide en forme de U.

Comme on le voit sur la figure 15, le système de liaison entre la traverse avant 2 et chacun des skis 60 directeurs comporte un cardan 63 qui est situé à l'extrémité inférieure du bras 62 et qui forme :
- un axe de direction 19 sensiblement vertical, pour permettre le braquage des skis 60 ;
- et un axe de suspension 23, sensiblement transversal, permettant au ski 60 d'épouser le relief.

En variante, les axes 19, 23 pourraient être dissociés et non regroupés par le biais d'un cardan.

Dans la réalisation représentée, le système de liaison entre la traverse avant 2 et chacun des skis 60 directeurs ne comporte pas de pivot d'inclinaison, ceci n'étant pas limitatif.

Puisqu'aucun pivot d'inclinaison n'est prévu, le véhicule 1 est dépourvu de dispositifs de couplage et de mécanisme de correction du braquage induit.

Le fait de prévoir des skis directeurs vise à conférer au véhicule 1 une plus grande maniabilité. Mais la trajectoire de ce véhicule n'est pas destinée à être commandé par un occupant de la nacelle 10. En conséquence ce véhicule est dépourvu de volant, de moyens de transmission, mécanisme de renvoi et moyens de commande du braquage arrière éventuel.

Sur la figure 16a, le véhicule 1 se déplace sur un sol plat, en virage à droite, sans force centrifuge. Dans ce cas, les skis 60 directeurs sont braqués vers la droite, en ayant pivoté autour de l'axe de direction 19. En l'absence de force centrifuge, la nacelle 10 ne pivote pas et reste donc parallèle au sol, tout comme les traverses 2, 3.

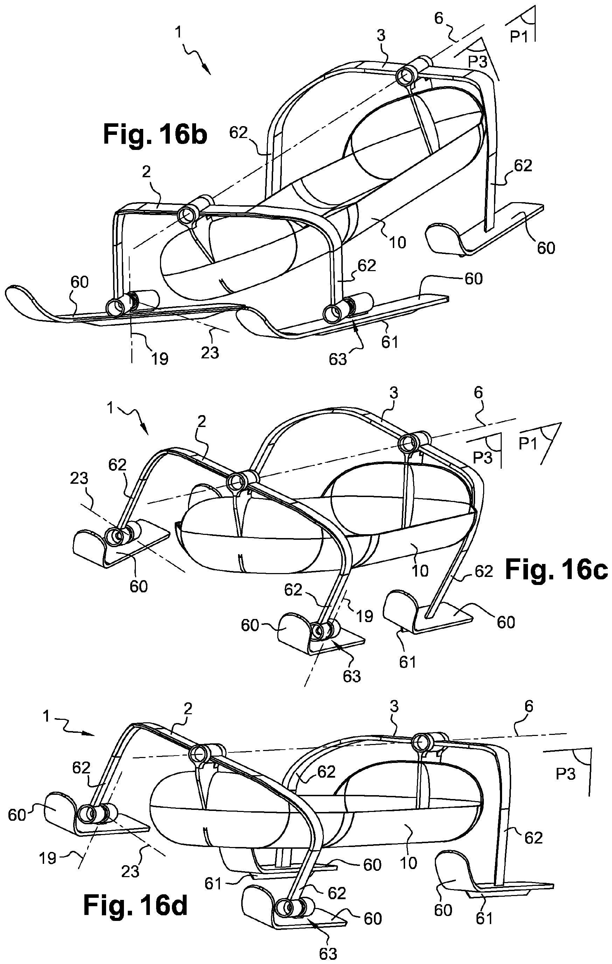

Sur la figure 16b, le véhicule 1 se déplace sur un sol plat en virage à droite, avec force centrifuge. Du fait de la force centrifuge, fonction du rayon du virage et de la vitesse, la nacelle 10 pivote autour de l'axe d'articulation 6 vers l'intérieur du virage. Ce pivotement est obtenu par effet de pendule, le centre de gravité de la nacelle 10 étant situé en dessous de l'axe d'articulation 6. Le plan longitudinal médian P3 de la nacelle 10 n'est donc plus vertical. En revanche, les traverses 2, 3 restent sensiblement parallèles entre elles et au sol, de même que les skis 60.

Sur la figure 16c, le véhicule 1 se déplace en dévers en ligne droite. La nacelle 10, montée pivotante autour de l'axe d'articulation 6 et ayant son centre de gravité situé sous ledit axe d'articulation 6, s'incline par effet de pendule. Le plan longitudinal médian P3 de la nacelle 10 reste donc sensiblement vertical. Les traverses 2, 3, quant à elles, sont sensiblement parallèles entre elles et au sol, de même que les skis 60. On note que le ski avant droit a pivoté, par rapport à la position neutre, autour de l'axe de suspension 23, pour épouser un terrain comportant localement une irrégularité.

Sur la figure 16d, le véhicule 1 se déplace en ligne droite avec un terrain en dévers à l'avant et plat à l'arrière.

Le plan longitudinal médian P3 de la nacelle 10 reste sensiblement vertical. Les skis 60 restent sensiblement parallèles au terrain, c'est-à-dire qu'ils sont inclinés par rapport à l'horizontale à l'avant, du fait de la présence d'un dévers, mais qu'ils sont horizontaux à l'arrière, où le terrain est plat. De façon similaire, une traverse 2, 3 donnée est sensiblement parallèle au sol au niveau des skis 60 concernés : ainsi, les traverses avant et arrière 2, 3 ne sont plus parallèles entre elles, ce qui est rendu possible par leur indépendance en rotation autour de l'axe d'articulation 6.

Ainsi, l'invention apporte une amélioration déterminante à la technique antérieure, en fournissant un véhicule, par exemple un véhicule terrestre à quatre roues ou un traîneau, dont la nacelle est inclinable - ainsi que, dans certains mode de réalisation, les supports de déplacement. Il en résulte que le véhicule :
- peut être parfaitement et automatiquement équilibré en virage sans le recours à des assistances électroniques ;
- présente un confort et une sécurité accrus ;
- peut être simplifié et allégé car il n'est pas nécessaire de le surdimensionner par rapport aux besoins « en ligne droite » où les sollicitations s'exercent dans le seul plan vertical ;
- présente une consommation nettement diminuée.

Dans le cas où, de plus, les supports de déplacement sont inclinables, le véhicule permet un contact permanent des supports de déplacement avec le sol quelle que soit l'importance des dévers et l'opposition de ces dévers entre l'avant et l'arrière du véhicule (« croisement de pont »), mais également en virage avec forte force centrifuge. Cette architecture permet une capacité d'adaptation nouvelle à toutes les situations sur route et en terrain escarpé.

Il va de soi que l'invention n'est pas limitée aux modes de réalisation décrits ci-dessus à titre d'exemples mais qu'elle comprend tous les équivalents techniques et les variantes des moyens décrits ainsi que leurs combinaisons.

Ainsi, on pourrait envisager un véhicule routier du type du premier ou du deuxième mode de réalisation, mais dont les roues ou les skis sont dépourvus de pivots d'inclinaison. Dans ce cas, les roues resteraient dans un plan perpendiculaire au sol, ou les skis resteraient parallèles au sol, tandis que la nacelle pivoterait.

On pourrait également envisager un véhicule du type du troisième mode de réalisation, où les skis comportent un axe d'inclinaison. Cet axe pourrait être incliné d'un angle a, comme décrit. En variante, cet axe pourrait être sensiblement longitudinal : dans ce cas, de préférence, cet axe serait situé à proximité de la surface de contact entre le ski et le sol, pour limiter le mouvement contre pendulaire. De plus, il faudrait prévoir un dispositif de couplage entre la nacelle et chacun des skis, pour que le pivotement de la nacelle entraîne l'inclinaison des skis.

## Revendications

1. Véhicule comprenant :
- un châssis comprenant une traverse avant (2) et une traverse arrière (3) ;
- au moins un train avant et un train arrière montés sur le châssis, chaque train comportant au moins deux supports de déplacement (4, 5, 60) sur le sol, les supports de déplacement (4, 5, 60) d'au moins un train étant directeurs, le système de liaison de chacun de ces supports de déplacement (4, 5, 60) directeurs sur la traverse (2, 3) correspondante comportant un pivot de direction (18) possédant un axe de direction (19) et permettant le braquage desdits supports de déplacement (4, 5, 60) ;
- une nacelle (10) destinée à recevoir au moins une personne ou une charge, montée pivotante par rapport au châssis autour d'un axe d'articulation (6) qui est sensiblement longitudinal, situé sensiblement dans le plan longitudinal médian (P1) du véhicule (1), et agencé de sorte que le centre de gravité de la nacelle (10) soit situé sous ledit axe d'articulation (6) ;
dans lequel les traverses avant (2) et arrière (3) sont des pièces distinctes n'étant liées entre elles que par la nacelle (10), via l'axe d'articulation (6), de sorte à pouvoir pivoter autour de l'axe d'articulation (6) indépendamment l'une de l'autre ;
**caractérisé en ce que** les traverses avant (2) et arrière (3) sont situées en partie supérieure de la nacelle (10) et **en ce que** chacune des traverses avant (2) et arrière (3) présente :
- une partie centrale dans laquelle passe l'axe d'articulation (6), et sur laquelle la portion avant (13), respectivement la portion arrière (14), de la nacelle (10) est montée pivotante autour de l'axe d'articulation (6) ;
- et deux parties extrêmes, chaque partie extrême étant connectée au support de déplacement (4, 5, 60) correspondant par un système de liaison (17) ;
et **en ce que** le système de liaison (17) entre chacun des supports de déplacement (4, 5, 60) directeurs d'un train et la traverse correspondante comprend un bras (17) articulé dont une première extrémité est liée à une extrémité de ladite traverse et forme avec ladite extrémité de ladite traverse un pivot de direction (18), et dont une deuxième extrémité est liée audit support de déplacement (4, 5, 60), ladite traverse et ledit pivot de direction (18) sont situés au-dessus dudit support de déplacement (4, 5, 60).

2. Véhicule selon la revendication 1, **caractérisé en ce qu'**il comprend un volant (30) de direction monté sur la nacelle (10), apte à provoquer le braquage des supports de déplacement (4, 5, 60) directeurs par l'intermédiaire de moyens de transmission (31, 33, 34, 35).

3. Véhicule selon la revendication 2, **caractérisé en ce que** chacun des supports de déplacement (4, 5, 60) est directeur, le volant (30) et les moyens de transmission (31, 33, 34, 35) étant agencés pour provoquer le braquage des supports de déplacement (4, 60) d'un premier train, le véhicule (1) comprenant en outre un mécanisme de renvoi (38, 39, 41, 42, 43) liant les moyens de transmission (31, 33, 34, 35) et des moyens de commande du braquage (36, 37) des supports de déplacement (5, 60) du deuxième train.

4. Véhicule selon l'une des revendications 1 à 3, **caractérisé en ce que** les supports de déplacement sont des roues (4, 5) ou des chenilles.

5. Véhicule selon l'une des revendications 1 à 3, **caractérisé en ce que** les supports de déplacement sont des supports glissants (60) aptes à glisser sur une surface enneigée, tels que des portions de tube ou des éléments en forme de skis, et **en ce que** le véhicule (1) comprend en outre un organe d'accrochage (61) qui fait saillie des supports glissants (60) vers le bas, les organes d'accrochage (61) étant conçus pour pouvoir s'enfoncer dans la neige et empêcher le dérapage latéral du véhicule (1).

6. Véhicule selon la revendication 5, **caractérisé en ce que**, pour chacun des supports glissants (60), le système de liaison comporte un pivot d'inclinaison possédant un axe d'inclinaison sensiblement longitudinal situé à proximité de la surface de contact entre le support glissant et le sol, et **en ce que** le véhicule (1) comprend un dispositif de couplage entre la nacelle (10) et chacun des supports glissants (60), les dispositifs de couplage étant agencés pour que le pivotement de la nacelle (10) entraîne l'inclinaison des supports glissants (60).

7. Véhicule selon l'une des revendications 1 à 5, **caractérisé en ce que**, pour chacun des supports de déplacement (4, 5, 60), le système de liaison comporte un pivot d'inclinaison (20) possédant un axe d'inclinaison (21) :
- qui s'étend dans un plan sensiblement parallèle au plan longitudinal médian (P1) du véhicule (1) en étant incliné vers le bas d'un angle (α) compris entre 5 et 45°, par rapport à l'axe longitudinal du véhicule (1), lorsque l'on se rapproche du point de contact (P) entre le support de déplacement (4, 5, 60) et le sol ;
- dont le point d'intersection (A) avec la perpendiculaire au sol passant par ledit point de contact (P) entre le support de déplacement (4, 5, 60) et le sol soit sensiblement confondu avec ledit point de contact (P) ou situé sous ledit point de contact (P) ;
le véhicule (1) étant conçu, de par sa géométrie et/ou la présence de moyens mécaniques (25) associant la nacelle (10) et les supports de déplacement (4, 5, 60) :
- pour provoquer, lorsque le véhicule (1) circule dans un virage, une inclinaison de chacun des supports de déplacement (4, 5, 60) vers l'intérieur du virage, sous l'effet de la force centrifuge, les traverses (2, 3) restant sensiblement parallèles au sol ;
- et pour corriger l'aplomb, lorsque le véhicule (1) circule dans un dévers, la nacelle (10) restant horizontale et le plan moyen des supports de déplacement (4, 5, 60) qui est sensiblement vertical en position neutre restant sensiblement vertical.

8. Véhicule selon la revendication 7, **caractérisé en ce qu'**il comprend un dispositif de couplage (25) entre la nacelle (10) et chacun des supports de déplacement (4, 5, 60), les dispositifs de couplage (25) étant agencés pour que le pivotement de la nacelle (10) entraîne l'inclinaison des supports de déplacement (4, 5, 60) et vice-versa.

9. Véhicule selon la revendication 7 ou 8, lorsqu'elle dépend de la revendication 2 ou 3, **caractérisé en ce que** les moyens de transmission entre le volant (30) et les supports de déplacement (4, 5, 60) directeurs, et les moyens de commande du braquage des supports de déplacement (5, 60) du deuxième train, lorsqu'ils sont présents, comprennent :
- une pièce rotative (34, 36) montée sur la nacelle (10) de façon libre en rotation autour de l'axe d'articulation (6) de la nacelle (10), la pièce rotative (34, 36) étant entraînée en rotation par une colonne de direction (31) qui est connectée au volant et qui présente un axe décalé par rapport à l'axe d'articulation (6) de la nacelle (10) ;
- et, pour chaque support de déplacement directeur (4, 5, 60), une biellette de direction (35, 37) présentant une première extrémité connectée à la pièce rotative (34, 36) à distance de l'axe d'articulation (6) et une deuxième extrémité connectée au système de liaison (17) entre ledit support de déplacement (4, 5, 60) et la traverse (2, 3) correspondante ;
les biellettes de direction (35, 37) d'un même train étant disposées sensiblement symétriquement par rapport au plan longitudinal médian (P1) du véhicule (1) quand le véhicule (1) est en position neutre ;
le sens de rotation de la pièce rotative (34, 36), par rapport au sens de rotation du volant (30), ainsi que le positionnement des biellettes de direction (35, 37), étant prévus pour que les moyens de transmission et les moyens de commande soient aptes à compenser de façon sensiblement exacte le braquage induit par l'inclinaison des supports de déplacement (4, 5, 60), en créant un braquage inverse du braquage induit.

10. Véhicule selon l'une des revendications 2 à 9, **caractérisé en ce que**, pour au moins un support de déplacement (4, 5, 60) :
- les moyens de transmission entre le volant (30) et ledit support de déplacement (4, 5, 60) ;
- et le dispositif de couplage (25) entre la nacelle (10) et ledit support de déplacement (4, 5, 60), lorsque le véhicule (1) est conforme à la revendication 7 ;
sont assemblés de façon amovible audit support de déplacement (4, 5, 60), de sorte à pouvoir être temporairement déconnectés dudit support de déplacement (4, 5, 60) pour permettre de tourner ledit support de déplacement (4, 5, 60) autour de l'axe de direction (19) avec une amplitude suffisante pour libérer l'accès à la nacelle (10) latéralement.

11. Véhicule selon l'une des revendications 1 à 10, **caractérisé en ce que** le système de liaison entre au moins une traverse (2, 3) et chacun des supports de déplacement (4, 5, 60) correspondants comprend en outre un dispositif de suspension (22) possédant un axe de suspension (23) sensiblement transversal, lorsque le véhicule (1) est en position neutre.

12. Véhicule selon les revendications 6 ou 7, et 11, **caractérisé en ce que**, depuis l'axe d'articulation (6) de la nacelle (10) en direction d'un support de déplacement (4, 5, 60), le système de liaison comprend, dans cet ordre, le pivot de direction (18), le pivot d'inclinaison (20), et le dispositif de suspension (22).

13. Véhicule selon l'une des revendications 1 à 12, **caractérisé en ce que** la nacelle (10) comprend un cadre (11) et un siège (15) monté sur le cadre (11), le cadre (11) comportant deux portions latérales (12) reliées par une portion avant (13) et une portion arrière (14), les portions avant et arrière (13, 14) s'étendant vers le haut par rapport aux portions latérales (12), l'axe d'articulation (6) de la nacelle (10) étant disposé au-dessus des portions latérales (12).

## Patentansprüche

1. Fahrzeug, umfassend:
- ein Fahrgestell, umfassend einen vorderen Querträger (2) und einen hinteren Querträger (3);
- mindestens einen vorderen Radsatz und einen hinteren Radsatz, die auf dem Fahrgestell angebracht sind, wobei jeder Radsatz mindestens zwei Bewegungsträger (4, 5, 60) auf dem Boden aufweist, wobei die Bewegungsträger (4, 5, 60) von mindestens einem Radsatz lenkend sind, wobei das Verbindungssystem jedes dieser lenkenden Bewegungsträger (4, 5, 60) auf dem entsprechenden Querträger (2, 3) einen Lenkzapfen (18) aufweist, der eine Lenkachse (19) besitzt und das Einschlagen der Bewegungsträger (4, 5, 60) erlaubt;
- eine Schale (10), die zur Aufnahme von mindestens einer Person oder einer Last bestimmt ist, die in Bezug auf das Fahrgestell um eine Gelenkachse (6) schwenkend angebracht ist, die etwa längs ist, die sich etwa in der Längsmittelebene (P1) des Fahrzeugs (1) befindet und derart eingerichtet ist, dass sich das Schwerkraftzentrum der Schale (10) unter der Gelenkachse (6) befindet;
wobei der vordere (2) und hintere (3) Querträger unterschiedliche Teile sind, die nur durch die Schale (10) über die Gelenkachse (6) derart miteinander verbunden sind, dass sie unabhängig voneinander um die Gelenkachse (6) schwenken können;
**dadurch gekennzeichnet, dass** sich der vordere (2) und hintere (3) Querträger im oberen Teil der Schale (10) befinden und dass jeder von dem vorderen (2) und hinteren (3) Querträger aufweist:
- einen zentralen Teil, in welchem die Gelenkachse (6) verläuft und auf dem der vordere Abschnitt (13) beziehungsweise der hintere Abschnitt (14) der Schale (10) um die Gelenkachse (6) schwenkend angebracht ist;
- und zwei Endteile, wobei jeder Endteil mit dem entsprechenden Bewegungsträger (4, 5, 60) durch ein Verbindungssystem (17) verbunden ist;
und dass das Verbindungssystem (17) zwischen jedem der lenkenden Bewegungsträger (4, 5, 60) eines Radsatzes und dem entsprechenden Querträger einen Gelenkarm (17) umfasst, von dem ein erstes Ende mit einem Ende des Querträgers verbunden ist und mit dem Ende des Querträgers einen Lenkzapfen (18) bildet, und von dem ein zweites Ende mit dem Bewegungsträger (4, 5, 60) verbunden ist, wobei sich der Querträger und der Lenkzapfen (18) oberhalb des Bewegungsträgers (4, 5, 60) befinden.

2. Fahrzeug nach Anspruch 1, **dadurch gekennzeichnet, dass** es ein auf der Schale (10) angebrachtes Lenkrad (30) umfasst, das imstande ist, das Einschlagen der lenkenden Bewegungsträger (4, 5, 60) über Übertragungsmittel (31, 33, 34, 35) zu veranlassen.

3. Fahrzeug nach Anspruch 2, **dadurch gekennzeichnet, dass** jeder der Bewegungsträger (4, 5, 60) lenkend ist, wobei das Lenkrad (30) und die Übertragungsmittel (31, 33, 34, 35) eingerichtet sind, um das Einschlagen der Bewegungsträger (4, 60) eines ersten Radsatzes zu veranlassen, wobei das Fahrzeug (1) ferner einen Rückstellmechanismus (38, 39, 41, 42, 43) umfasst, der die Übertragungsmittel (31, 33, 34, 35) und Steuermittel des Einschlagens (36, 37) der Bewegungsträger (5, 60) des zweiten Radsatzes verbindet.

4. Fahrzeug nach einem der Ansprüche 1 bis 3, **dadurch gekennzeichnet, dass** die Bewegungsträger Räder (4, 5) oder Raupen sind.

5. Fahrzeug nach einem der Ansprüche 1 bis 3, **dadurch gekennzeichnet, dass** die Bewegungsträger gleitende Träger (60) sind, die imstande sind, auf einer verschneiten Fläche zu gleiten, wie Rohrabschnitte oder Elemente in Form von Skiern, und dass das Fahrzeug (1) ferner ein Verhakungsorgan (61) umfasst, das über die gleitenden Träger (60) nach unten hervorsteht, wobei die Verhakungsorgane (61) ausgebildet sind, um in den Schnee eindringen zu können und um das seitliche Wegrutschen des Fahrzeugs (1) zu verhindern.

6. Fahrzeug nach Anspruch 5, **dadurch gekennzeichnet, dass** das Verbindungssystem für jeden der gleitenden Träger (60) einen Neigungszapfen aufweist, der eine etwa längs verlaufende Neigungsachse besitzt, die sich in der Nähe der Kontaktfläche zwischen dem gleitenden Träger und dem Boden befindet, und dass das Fahrzeug (1) eine Kopplungsvorrichtung zwischen der Schale (10) und jedem der gleitenden Träger (60) umfasst, wobei die Kopplungsvorrichtungen eingerichtet sind, damit das Schwenken der Schale (10) das Neigen der gleitenden Träger (60) bewirkt.

7. Fahrzeug nach einem der Ansprüche 1 bis 5, **dadurch gekennzeichnet, dass** das Verbindungssystem für jeden der Bewegungsträger (4, 5, 60) einen Neigungszapfen (20) aufweist, der eine Neigungsachse (21) besitzt:
- die sich in einer Ebene erstreckt, die etwa parallel zur Längsmittelebene (P1) des Fahrzeugs (1) ist, indem sie nach unten in einem Winkel (α) geneigt ist, der zwischen 5 und 45° liegt, in Bezug auf die Längsachse des Fahrzeugs (1), wenn man sich dem Kontaktpunkt (P) zwischen dem Bewegungsträger (4, 5, 60) und dem Boden nähert;
- deren Schnittpunkt (A) mit der Senkrechten zum Boden, die durch den Kontaktpunkt (P) zwischen dem Bewegungsträger (4, 5, 60) und dem Boden verläuft, entweder etwa mit dem Kontaktpunkt (P) zusammenfällt oder sich unter dem Kontaktpunkt (P) befindet;
wobei das Fahrzeug (1) aufgrund seiner Geometrie und/oder des Vorhandenseins von mechanischen Mitteln (25), die die Schale (10) und die Bewegungsträger (4, 5, 60) verbinden, ausgebildet ist:
- um, wenn das Fahrzeug (1) in einer Kurve fährt, eine Neigung jedes der Bewegungsträger (4, 5, 60) nach innen in die Kurve zu veranlassen, unter der Wirkung der Zentrifugalkraft, wobei die Querträger (2, 3) etwa parallel zum Boden verbleiben;
- und, um das Gleichgewicht zu korrigieren, wenn sich das Fahrzeug (1) beim Fahren zur Seite neigt, wobei die Schale (10) horizontal bleibt und die Mittelebene der Bewegungsträger (4, 5, 60), die in neutraler Position etwa vertikal ist, etwa vertikal bleibt.

8. Fahrzeug nach Anspruch 7, **dadurch gekennzeichnet, dass** es eine Kopplungsvorrichtung (25) zwischen der Schale (10) und jedem der Bewegungsträger (4, 5, 60) umfasst, wobei die Kopplungsvorrichtungen (25) eingerichtet sind, damit das Schwenken der Schale (10) das Neigen der Bewegungsträger (4, 5, 60) und umgekehrt bewirkt.

9. Fahrzeug nach Anspruch 7 oder 8, wenn er von Anspruch 2 oder 3 abhängt, **dadurch gekennzeichnet, dass** die Übertragungsmittel zwischen dem Lenkrad (30) und den lenkenden Bewegungsträgern (4, 5, 60) und die Steuermittel des Einschlagens der Bewegungsträger (5, 60) des zweiten Radsatzes, wenn vorhanden, umfassen:
- ein rotierendes Teil (34, 36), das auf der Schale (10) frei rotierend um die Gelenkachse (6) der Schale (10) angebracht ist, wobei das rotierende Teil (34, 36) von einer Lenksäule (31) rotierend angetrieben wird, die mit dem Lenkrad verbunden ist und die eine die in Bezug auf die Gelenkachse (6) der Schale (10) versetzte Achse aufweist;
- und, für jeden lenkenden Bewegungsträger (4, 5, 60), eine Spurstange (35, 37), aufweisend ein erstes Ende, das mit dem rotierenden Teil (34, 36) beabstandet von der Gelenkachse (6) verbunden ist, und ein zweites Ende, das mit dem Verbindungssystem (17) zwischen dem Bewegungsträger (4, 5, 60) und dem entsprechenden Querträger (2, 3) verbunden ist;
wobei die Spurstangen (35, 37) desselben Radsatzes etwa symmetrisch in Bezug auf die Längsmittelebene (P1) des Fahrzeugs (1) angeordnet sind, wenn das Fahrzeug (1) in neutraler Position ist;
wobei die Rotationsrichtung des rotierenden Teils (34, 36) in Bezug auf die Rotationsrichtung des Lenkrads (30) sowie die Positionierung der Spurstangen (35, 37) vorgesehen sind, damit die Übertragungsmittel und die Steuermittel imstande sind, das von der Neigung der Bewegungsträger (4, 5, 60) induzierte Einschlagen durch Erzeugen eines zum induzierten Einschlagen umgekehrten Einschlagens etwa genau auszugleichen.

10. Fahrzeug nach einem der Ansprüche 2 bis 9, **dadurch gekennzeichnet, dass** für mindestens einen Bewegungsträger (4, 5, 60):
- die Übertragungsmittel zwischen dem Lenkrad (30) und dem Bewegungsträger (4, 5, 60);
- und die Kopplungsvorrichtung (25) zwischen der Schale (10) und dem Bewegungsträger (4, 5, 60), wenn das Fahrzeug (1) Anspruch 7 entspricht;
mit dem Bewegungsträger (4, 5, 60), lösbar verbunden sind, so dass sie von dem Bewegungsträger (4, 5, 60) zeitweise lösbar sind, um das Drehen des Bewegungsträgers (4, 5, 60) um die Lenkachse (19) mit einer Amplitude zu erlauben, die für die Freigabe des seitlichen Zugangs zu der Schale (10) ausreichend ist.

11. Fahrzeug nach einem der Ansprüche 1 bis 10, **dadurch gekennzeichnet, dass** das Verbindungssystem zwischen mindestens einem Querträger (2, 3) und jedem der entsprechenden Bewegungsträger (4, 5, 60) ferner eine Aufhängungsvorrichtung (22) umfasst, die eine etwa transversale Aufhängungsachse (23) besitzt, wenn das Fahrzeug (1) in neutraler Position ist.

12. Fahrzeug nach den Ansprüchen 6 oder 7 und 11, **dadurch gekennzeichnet, dass** das Verbindungssystem ab der Gelenkachse (6) der Schale (10) in Richtung eines Bewegungsträgers (4, 5, 60) den Lenkzapfen (18), den Neigungszapfen (20) und die Aufhängungsvorrichtung (22) in dieser Reihenfolge umfasst.

13. Fahrzeug nach einem der Ansprüche 1 bis 12, **dadurch gekennzeichnet, dass** die Schale (10) einen Rahmen (11) und einen Sitz (15) umfasst, der auf dem Rahmen (11) angebracht ist, wobei der Rahmen (11) zwei seitliche Abschnitte (12) aufweist, die durch einen vorderen Abschnitt (13) und einen hinteren Abschnitt (14) verbunden sind, wobei sich der vordere und hintere Abschnitt (13, 14) in Bezug auf die seitlichen Abschnitte (12) nach oben erstrecken, wobei die Gelenkachse (6) der Schale (10) oberhalb der seitlichen Abschnitte (12) angeordnet ist.

## Claims

1. A vehicle comprising:
- a chassis comprising a front cross-member (2) and a rear cross-member (3);
- at least one front train and one rear train mounted on the chassis, each train including at least two movement supports (4, 5, 60) on the ground, the movement supports (4, 5, 60) of at least one train being steered ones, the link system of each of these movement supports (4, 5, 60) on the corresponding cross-member (2, 3) including a steering pivot (18) having a steering axis (19) and allowing the steering of said movement supports (4, 5, 60);
- a nacelle (10) intended to receive at least one person or a load, pivotally mounted relative to the chassis about a hinge axis (6) which is substantially longitudinal, substantially situated in the median longitudinal plane (P1) of the vehicle (1), and arranged so that the center of gravity of the nacelle (10) is situated under said hinge axis (6);
wherein the front (2) and rear (3) cross-members are distinct pieces being linked together only by the nacelle (10), via the hinge axis (6), so as to be able to pivot about the hinge axis (6) independently of one another;
**characterized in that** the front (2) and rear (3) cross-members are situated in the upper part of the nacelle (10) and **in that** each of the front (2) and rear cross-members (3) presents:
- a central part wherein passes the hinge axis (6), and on which the front portion (13), respectively the rear portion (14), of the nacelle (10) is pivotally mounted about the hinge axis (6);
- and two end parts, each end part being connected to the corresponding movement support (4, 5, 60) by a link system (17);
and **in that** the link system (17) between each of the steered movement supports (4, 5, 60) of a train and the corresponding cross-member comprises an hinged arm (17) whose first end is linked at an end of said cross-member and forms, with said end of said cross-member, a steering pivot (18) and a second end of which is linked to said movement support (4, 5, 60), said cross-member and said steering pivot (18) are situated above said movement support (4, 5, 60).

2. The vehicle according to claim 1, **characterized in that** it comprises a steering wheel (30) mounted on the nacelle (10), capable of causing the steering of the steered movement supports (4, 5, 60) through transmission means (31, 33, 34, 35).

3. The vehicle according to claim 2, **characterized in that** each of the movement supports (4, 5, 60) is a steered one, the steering wheel (30) and the transmission means (31, 33, 34, 35) being arranged to cause the steering of the movement supports (4, 60) of a first train, the vehicle (1) further comprising a transmitting mechanism (38, 39, 41, 42, 43) linking the transmission means (31, 33, 34, 35) and the steering control means (36, 37) of the movement supports (5, 60) of the second train.

4. The vehicle according to any of claims 1 to 3, **characterized in that** the movement supports are wheels (4, 5) or tracks.

5. The vehicle according to any of claims 1 to 3, **characterized in that** the movement supports are sliding supports (60) capable of sliding on a snowy surface, such as tube portions or skis-shaped elements, and **in that** the vehicle (1) further comprises an attachment member (61) which projects from the sliding supports (60) downwards, the attachment members (61) being designed to be able to sink into the snow and prevent lateral skidding of the vehicle (1).

6. The vehicle according to claim 5, **characterized in that**, for each of the sliding supports (60), the link system includes an inclination pivot having a substantially longitudinal inclination axis situated close to the contact surface between the sliding support and the ground, and **in that** the vehicle (1) comprises a coupling device between the nacelle (10) and each of the sliding supports (60), the coupling devices being arranged so that the pivoting of the nacelle (10) causes the inclination of the sliding supports (60).

7. The vehicle according to any of claims 1 to 5, **characterized in that**, for each of the movement supports (4, 5, 60), the link system includes an inclination pivot (20) having an inclination axis (21):
- which extends in a plane substantially parallel to the median longitudinal plane (P1) of the vehicle (1) by being inclined downwards at an angle (α) between 5 and 45°, relative to the longitudinal axis of vehicle (1), when it approaches the contact point (P) between the movement support (4, 5, 60) and the ground;
- when the point of intersection (A) with the perpendicular to the ground passing through said contact point () between the movement support (4, 5, 60) and the ground is substantially coincident with the said contact point (P) or situated under said contact point (P);
the vehicle (1) being designed, by its geometry and/or the presence of mechanical means (25) associating the nacelle (10) and the movement supports (4, 5, 60):
- for causing, when the vehicle (1) is running on a turn, an inclination of each of the movement supports (4, 5, 60) to the inside of the turn, under the effect of centrifugal force, the cross-members (2, 3) remaining substantially parallel to the ground;
- and for correcting the plumb, when the vehicle (1) is travelling in a cant, the nacelle (10) remaining horizontal and the mid-plane of the movement supports (4, 5, 60) which is substantially vertical in the neutral position remaining substantially vertical.

8. The vehicle according to claim 7, **characterized in that** it comprises a coupling device (25) between the nacelle (10) and each of the movement supports (4, 5, 60), the coupling devices (25) being arranged so that the pivoting of the nacelle (10) drives the inclination of the movement supports (4, 5, 60) and vice versa.

9. The vehicle according to claim 7 or 8 when dependent on claim 2 or 3, **characterized in that** the transmission means between the steering wheel (30) and the steered movement supports (4, 5, 60), and the control means of the steering of the movement supports (5, 60) of the second train, when they are present, comprise:
- a rotary piece (34, 36) mounted on the nacelle (10) freely in rotation about the hinge axis (6) of the nacelle (10), the rotary piece (34, 36) being driven in rotation by a steering column (31) which is connected to the steering wheel and which presents an axis offset relative to the hinge axis (6) of the nacelle (10);
- and, for each steered movement support (4, 5, 60), a steering connecting-rod (35, 37) presenting a first end connected to the rotary part (34, 36) at a distance from the hinge axis (6) and a second end connected to the link system (17) between said movement support (4, 5, 60) and the corresponding cross-members (2, 3);
the steering connecting-rods (35, 37) of a same train being disposed substantially symmetrically relative to the median longitudinal plane (P1) of the vehicle (1) when the vehicle (1) is in neutral position;
the direction of rotation of the rotary part (34, 36), relative to the rotation direction of the steering wheel (30) and the positioning of the steering connecting-rods (35, 37) being provided so that the transmission means and the control means are capable of compensating in a substantially exact way the steering induced by the inclination of the movement supports (4, 5, 60), by creating a reverse steering of the induced steering.

10. The vehicle according to any of claims 2 to 9, **characterized in that**, for at least one movement support (4, 5, 60):
- the transmission means between the steering wheel (30) and said movement support (4, 5, 60);
- and the coupling device (25) between the nacelle (10) and said movement support (4, 5, 60), when the vehicle (1) is in compliance with claim 7;
are removably assembled to said movement support (4, 5, 60), so as to be capable of being temporarily disconnected from said movement support (4, 5, 60) to allow rotating said movement support (4, 5, 60) about the steering axis (19) with a sufficient amplitude in order to release the access to the nacelle (10) laterally.

11. The vehicle according to any of claims 1 to 10, **characterized in that** the link system between at least one cross-member (2, 3) and each of the corresponding movement supports (4, 5, 60) further comprises a suspension device (22) having a substantially transverse suspension axis (23), when the vehicle (1) is in neutral position.

12. The vehicle according to claims 6 or 7, and 11, **characterized in that**, from the hinge axis (6) of the nacelle (10) toward a movement support (4, 5, 60), the link system comprises, in this order, the steering pivot (18), the inclination pivot (20) and the suspension device (22).

13. The vehicle according to any of claims 1 to 12, **characterized in that** the nacelle (10) comprises a frame (11) and a seat (15) mounted on the frame (11), the frame (11) including two lateral portions (12) linked by a front portion (13) and a rear portion (14), the front and rear portions (13, 14) extending upwards relative to the lateral portions (12), the hinge axis (6) of the nacelle (10) being disposed above the lateral portions (12).
